# FASCICULE DE BREVET EUROPEEN

(11) **EP 2 652 548 B1**
(45) Date de publication et mention de la délivrance du brevet: **11.07.2018**
(21) Numéro de dépôt: 11794759.8
(22) Date de dépôt: 14.12.2011
(51) Int. Cl.: G02F 1/15, G02F 1/155

(54) **DISPOSITIF ELECTROCHROME TOUT-SOLIDE, BICOUCHE ELECTROCHROME POUR CE DISPOSITIF, ET PROCEDE DE PREPARATION DE CE DISPOSITIF.**
VÖLLIG FESTE ELEKTROCHROME VORRICHTUNG, ELEKTROCHROME DOPPELSCHICHT FÜR DIESE VORRICHTUNG UND VERFAHREN ZUR HERSTELLUNG DIESER VORRICHTUNG
ALL SOLID-STATE ELECTROCHROMIC DEVICE, ELECTROCHROMIC BILAYER FOR SAID DEVICE, AND METHOD FOR PRODUCING SAID DEVICE

(30) Priorité: 15.12.2010 FR 1060576
(43) Date de publication de la demande: 23.10.2013
(73) Titulaire: Commissariat à l'Énergie Atomique et aux Énergies Alternatives, 75015 Paris (FR)
(72) Inventeur: MARCEL, Corinne, F-37200 Tours (FR); SABARY, Frédéric, F-37000 Tours (FR); MARTEAU, Daniel, F-37000 Tours (FR); DEMEAUX, Julien, F-28200 Thiville (FR)
(74) Mandataire: Ilgart, Jean-Christophe
(86) Numéro de dépôt international: PCT/EP2011/072722
(87) Numéro de publication internationale: WO 2012/080312

(56) Documents cités:
- LARSSON A-L ET AL: "Infrared emittance modulation of all-thin-film electrochromic devices", MATERIALS LETTERS, NORTH HOLLAND PUBLISHING COMPANY. AMSTERDAM, NL, vol. 58, no. 20, 1 août 2004 (2004-08-01), pages 2517-2520, XP004515880, ISSN: 0167-577X, DOI: DOI:10.1016/J.MATLET.2004.03.023
- ANTONAIA A ET AL: "Improvement in electrochromic response for an amorphous/crystalline WO3 double layer", ELECTROCHIMICA ACTA, ELSEVIER SCIENCE PUBLISHERS, BARKING, GB, vol. 46, no. 13-14, 2 avril 2001 (2001-04-02), pages 2221-2227, XP004234007, ISSN: 0013-4686, DOI: DOI:10.1016/S0013-4686(01)00405-4
- FRANKE E B ET AL: "Infrared switching electrochromic devices based on tungsten oxide", JOURNAL OF APPLIED PHYSICS, AMERICAN INSTITUTE OF PHYSICS. NEW YORK, US, vol. 88, no. 10, 15 novembre 2000 (2000-11-15), pages 5777-5784, XP012050894, ISSN: 0021-8979, DOI: DOI:10.1063/1.1319325
- CRNJAK OREL Z ET AL: "STRUCTURAL AND ELECTROCHEMICAL PROPERTIES FO CEO2 AND MIXED CEO2/SNO2 COATINGS", SOLAR ENERGY MATERIALS AND SOLAR CELLS, ELSEVIER SCIENCE PUBLISHERS, AMSTERDAM, NL, vol. 40, no. 3, 1 juillet 1996 (1996-07-01), pages 205-219, XP000631550, ISSN: 0927-0248, DOI: DOI:10.1016/0927-0248(95)00088-7
- BESSIÈRE A ET AL: "Control of Powder Microstructure for improved Infrared Reflectance Modulation of an Electrochromic Plastic Device", CHEMISTRY OF MATERIALS, AMERICAN CHEMICAL SOCIETY, WASHINGTON, US, vol. 15, no. 13, 30 mai 2003 (2003-05-30), pages 2577-2583, XP002332809, ISSN: 0897-4756, DOI: DOI:10.1021/CM021752Q
- LEE SE-HEE ET AL: "Electrochromic mechanism in a-WO3-y thin films", APPLIED PHYSICS LETTERS, AIP, AMERICAN INSTITUTE OF PHYSICS, MELVILLE, NY, US, vol. 74, no. 2, 11 janvier 1999 (1999-01-11), pages 242-244, XP012022654, ISSN: 0003-6951, DOI: 10.1063/1.123268
- C LAMPERT: "Electrochromic materials and devices for energy efficient windows*", SOLAR ENERGY MATERIALS, vol. 11, no. 1-2, 1 octobre 1984 (1984-10-01), pages 1-27, XP55018199, ISSN: 0165-1633, DOI: 10.1016/0165-1633(84)90024-8

## Description

### DOMAINE TECHNIQUE

L'invention concerne un dispositif électrochrome tout-solide.

Plus précisément, l'invention concerne un dispositif électrochrome tout-solide à réflexion ou émission infrarouge contrôlée, notamment de type électrocommandable.

L'invention a trait, en outre, à un bicouche, aussi appelé électrode bicouche ou composite pour un tel dispositif électrochrome.

L'invention concerne enfin un procédé de préparation dudit dispositif.

Le domaine technique de l'invention peut être défini comme celui des dispositifs électrochromes actifs dans l'infrarouge.

### ÉTAT DE LA TECHNIQUE ANTÉRIEURE

Il existe actuellement deux familles de dispositifs électrochromes actifs dans l'infrarouge, à savoir les dispositifs souples qui peuvent être « tout-organique » exclusivement à base de polymères organiques ou bien hybrides, et les dispositifs « tout-solide » constitués d'empilements de couches inorganiques ou minérales.

Si l'on s'intéresse aux dispositifs « tout-organique », le document FR-A1-2 825 481 décrit une structure électrochrome souple fonctionnant en réflexion à des longueurs d'onde comprises entre 0,35 et 20 µm qui comprend une membrane microporeuse en polymère incluant un électrolyte généralement liquide, et, déposées sur chacune des surfaces de la membrane microporeuse et dans cet ordre : une électrode formée d'une couche conductrice électroniquement réfléchissante par exemple en or, une couche de polymère conducteur électrochrome par exemple de polyaniline, polythiophène, ou polypyrrole, et une fenêtre souple et transparente.

Le dispositif décrit dans ce document présente des interfaces fragiles qui limitent sa durée de vie. En effet, l'électrolyte est généralement liquide, et si un défaut d'étanchéité vient à survenir, il peut alors se produire une fuite d'électrolyte conduisant éventuellement à un assèchement du dispositif.

Le manque d'électrolyte altère gravement les propriétés électrochromes.

Le document WO-A1-2010/058108 décrit un dispositif électroémissif comprenant un matériau sous la forme d'un réseau semi-interpénétré de polymères. Ce dispositif présente l'avantage de ne pas nécessiter de couche d'or pour fonctionner.

Bien que présentant une très bonne cyclabilité à température ambiante alliée à une architecture simplifiée, ce dispositif nécessite lui aussi une étape d'imprégnation dans un électrolyte liquide. De plus, les tests réalisés à température élevée révèlent une dégradation des propriétés électrochromes.

Des dispositifs hybrides sont décrits dans le document FR-A1-2 879 764. Ce document a trait à une cellule électrochimique souple, aqueuse, à émission contrôlée qui comprend entre autres, une couche active poreuse formée d'un mélange de PVDF-HFP, de PEO et d'une poudre d'un matériau d'insertion, et une contre-électrode poreuse formée d'un mélange de PVDF-HFP, de PEO et d'une poudre d'un composé comprenant des ions complémentaires aux ions d'insertion.

Le matériau d'insertion WO₃.H₂O possède une bonne conduction protonique alliée à une réflexion IR modulable sur fond absorbant carboné, perméable aux ions et collecteur de courant.

Bien que plus robuste que celui du document FR-A1-2,825,481, ce dispositif, laminé intimement avec un électrolyte gélifié, nécessite lui aussi d'être encapsulé par une fenêtre étanche et transparente dans l'infrarouge, ce qui complique sa conception.

Les dispositifs souples, quels qu'ils soient, présentent en particulier l'inconvénient, notamment lorsqu'ils sont utilisés pour la protection thermique des satellites, d'être peu adaptés aux conditions spatiales.

En effet, les électrolytes gels posent des problèmes lorsqu'ils sont utilisés sous vide, et les polymères qui constituent les dispositifs souples se déforment sous l'effet de la chaleur et sont peu résistants aux UV.

Les dispositifs « tout-solide », « commandables », sont le plus souvent conçus pour une application dans le domaine du vitrage, et permettent d'allier confort visuel et confort thermique dans le domaine du visible et du proche Infrarouge (IR).

Le matériau actif est généralement constitué d'une couche d'oxyde de tungstène poreux et faiblement cristallisé, c'est-à-dire amorphe aux rayons X.

Cette couche dite couche de HₓWO₃-a devient absorbante lorsque le matériau est intercalé, en d'autres termes lorsque des protons y sont insérés, à savoir lorsque x>0.

Un exemple d'un tel dispositif « tout-solide » est décrit dans le document FR-A1-2 904 704 qui concerne un dispositif électrochimique, et/ou électrocommandable du type vitrage et à propriétés optiques et/ou énergétiques variables.

Ce dispositif comprend un empilement électrochrome « tout-solide » de structure TC1/EC1/EL/EC2/TC2 avec un substrat porteur muni d'une première couche électroconductrice TC1, une première couche électrochimiquement active EC1 susceptible d'insérer de manière réversible des ions comme des cations tels que H⁺ ou Li⁺ ou des anions tels que OH⁻, notamment en un matériau électrochrome cathodique ou respectivement anodique, une couche d'électrolyte EL, une seconde couche électrochimiquement active EC2 susceptible d'insérer de manière réversible lesdits ions, notamment en un matériau électrochrome cathodique ou respectivement anodique, et une seconde couche électroconductrice TC2.

Chaque couche électroactive EC1 ou EC2 peut notamment comporter de l'oxyde de tungstène.

Or, ce dispositif tout-solide ne peut être employé pour une modulation du rayonnement infrarouge moyen, à savoir d'une longueur d'onde généralement de 1,5 à 20 µm, car les électrodes TC1 et TC2 ne sont pas transparentes au-delà de 2 µm, en raison de leur conductivité élevée.

Ainsi, des problèmes particuliers se posent pour les dispositifs électrochromes « tout-solide », inorganiques, actifs dans l'infrarouge.

En effet, les dispositifs électrochromes actifs dans l'infrarouge de conception classique nécessitent une électrode transparente dans l'infrarouge afin que la signature du matériau actif puisse être efficace et modulable.

Ainsi, le document US-B1-7,265,890 décrit-il un dispositif électrochrome qui comprend sur un substrat rigide ou flexible une électrode constituée par exemple, par un film de métal ou par une couche d'oxyde métallique conducteur tel que l'ITO, une couche électrochrome, par exemple en oxyde de tungstène chargée en ions lithium, une couche de transfert d'ions en nitrure de lithium, une couche d'électrolyte, une couche de stockage d'ions, et une électrode transparente en métal.

Dans ce dispositif, le matériau actif LiₓWO₃ est déposé à l'arrière de l'empilement.

Les performances d'un tel dispositif sont alors limitées par la transparence aux infrarouges des couches supérieures constituées par l'électrolyte, la contre-électrode réservoir d'ions et l'électrode chargée d'y amener le courant.

Les empilements actifs dans l'infrarouge, et notamment dans le moyen infrarouge, à savoir d'une longueur d'onde généralement de 1,5 à 20 µm, peuvent comprendre une couche d'oxyde de tungstène HₓWO₃-a en face avant et absorbante sur fond réflecteur.

Le document de K. Sauvet, L. Sauques et A. Rougier, Journal of Physics and Chemistry of Solids 71, (2010), 696-699, mentionne l'utilisation d'une grille d'or poreuse réflectrice en tant qu'électrode pour HₓWO₃-a à l'instar de l'architecture utilisée dans le système souple « tout-organique » du document FR-A1-2825481, où la signature optique du matériau actif est déconnectée du reste du dispositif.

Toutefois, dans le cas des systèmes complets conçus par ces auteurs, l'emploi d'une électrode transparente aux infrarouges, en plus de la grille d'or à maillage micronique, reste nécessaire afin d'amener les électrons dans le matériau actif.

Or, les électrodes transparentes dans l'infrarouge sont encore à l'état de recherche, et sont difficilement industrialisables.

Actuellement, on a recours à des grilles d'or transparentes dans l'infrarouge à maillage submillimétrique réalisées par photolithographie sur verre transparent de type BaF₂, ce qui complique de manière drastique la réalisation des dispositifs.

Ainsi, le document FR-A1-2934062 a trait à un dispositif électrochrome à réflexion infrarouge contrôlée, notamment de type électrocommandable qui comporte entre un substrat porteur transparent dans le domaine IR et un contre substrat, un empilement comprenant successivement :
- une grille métallique, de préférence en or, transparent dans le domaine infrarouge, formant une première électrode,
- un système fonctionnel électrochrome comprenant une couche d'un premier matériau électrochrome de stockage ionique (EC1), de préférence à base d'oxyde d'iridium, au moins une couche à fonction électrolytique (EL1, EL2) de préférence à base d'oxyde de tantale et d'oxyde de tungstène, et une couche d'un second matériau électrochrome (EC2),
- une couche métallique apte à réfléchir le rayonnement infrarouge, formant une seconde électrode,
- un intercalaire de feuilletage en matériau thermoplastique.

Il existe donc, au regard de ce qui précède, un besoin pour un dispositif électrochrome, actif dans l'infrarouge, de préférence dans l'infrarouge moyen, notamment à émissivité modulable dans l'infrarouge (IR) qui permette de s'affranchir de l'utilisation d'électrodes transparentes au rayonnement infrarouge et notamment de grilles en or.

Il existe encore, au regard de ce qui précède, un besoin pour un dispositif électrochrome, actif dans l'infrarouge, de préférence dans l'infrarouge moyen, robuste, possédant une résistance mécanique élevée, résistant aux températures élevées, par exemple supérieures ou égales à 100°C, résistant aux rayonnements ultraviolets, pouvant être placé dans un environnement où règne le vide, par exemple dans l'espace.

Il existe, également, un besoin pour un dispositif qui puisse être fabriqué par un procédé simple, comportant un nombre limité d'étapes, et d'une durée réduite.

Le but de la présente invention est de fournir un dispositif électrochrome, actif dans l'infrarouge, de préférence dans l'infrarouge moyen, qui réponde entre autres aux besoins énumérés plus haut.

Le but de la présente invention est encore de fournir un tel dispositif qui ne présente pas les inconvénients, limitations, défauts et désavantages des dispositifs de l'art antérieur, et qui résolve les problèmes des dispositifs de l'art antérieur.

### EXPOSÉ DE L'INVENTION

Dans la présente description, il est fait référence à un premier matériau électrochrome de stockage protonique. Ce premier matériau électrochrome de stockage protonique de la description correspond au matériau électrochrome de stockage protonique mentionné dans les revendications.

De même, le second matériau électrochrome à taux d'intercalation protonique variable, choisi parmi l'oxyde de tungstène cristallisé HₓWO₃-c où x est compris entre 0 et 1, et l'oxyde de tungstène cristallisé hydraté HₓWO₃.nH₂0-c où x est compris entre 0 et 1 et n est un nombre entier de 1 à 2, mentionné dans la description, correspond au matériau électrochrome à taux d'intercalation protonique variable, choisi parmi l'oxyde de tungstène cristallisé HₓWO₃-c où x est compris entre 0 et 1, et l'oxyde de tungstène cristallisé hydraté HₓWO₃.nH₂0-c où x est compris entre 0 et 1 et n est un nombre entier de 1 à 2, mentionné dans les revendications.

Ce but, et d'autres encore sont atteints, conformément à la présente invention, par un dispositif électrochrome tout-solide à réflexion ou émission infrarouge contrôlée, notamment de type électrocommandable, comprenant un empilement, ledit empilement comprenant successivement depuis une face arrière jusqu'à une face avant exposée aux rayons infrarouges :
a) un substrat en un matériau conducteur électronique, ou un substrat en un matériau non conducteur électronique recouvert d'une couche en un matériau conducteur électronique, ledit substrat en un matériau conducteur électronique ou ladite couche en un matériau conducteur électronique formant une première électrode ;
b) une couche en un premier matériau électrochrome de stockage protonique ;
c) une couche d'un électrolyte conducteur protonique et isolant électronique ;
d) un bicouche comprenant une couche d'un oxyde de tungstène sous stoechiométrique, non électrochrome, WO_{3-y} où y est compris entre 0,2 et 1, optiquement absorbante dans l'infrarouge (de préférence dans le moyen infrarouge), conductrice électronique, poreuse, formant une seconde électrode ; ladite couche d'oxyde de tungstène WO_{3-y} étant disposée sous une couche à réflexion variable dans l'infrarouge, d'un second matériau électrochrome à taux d'intercalation protonique variable, choisi parmi l'oxyde de tungstène cristallisé HₓWO₃-c où x est compris entre 0 et 1, et l'oxyde de tungstène cristallisé hydraté HₓWO₃.nH₂O-c où x est compris entre 0 et 1 et n est un nombre entier de 1 à 2.
e) une couche de protection, transparente aux rayons infrarouges, en un matériau inorganique.

La couche à réflexion variable qui fait partie du bicouche d) est plus ou moins réfléchissante ou même pas du tout réfléchissante selon la valeur de x.

Ainsi pour x = 0, cette couche n'est pas réfléchissante et pour les valeurs de x au-delà de 0,1, cette couche est réfléchissante.

Avantageusement, ledit substrat lorsqu'il est en un matériau conducteur électronique, peut être en un matériau choisi parmi les matériaux résistants mécaniquement et chimiquement aux sollicitations du milieu extérieur (par exemple dans l'espace) et chimiquement compatible vis-à-vis d'un fonctionnement protonique et notamment chimiquement compatible vis-à-vis du premier matériau électrochrome de stockage protonique, de préférence ledit matériau conducteur électronique est choisi parmi les métaux tels que l'aluminium, le platine ou le chrome, et leurs alliages.

Par matériau « chimiquement compatible vis-à-vis d'un fonctionnement protonique », on entend généralement un matériau dont les propriétés (chimiques, physiques, mécaniques, électroniques) ne sont pas dégradées lors d'un fonctionnement du dispositif avec des protons.

Par « chimiquement compatible vis-à-vis du premier matériau électrochrome de stockage protonique », on entend généralement que le matériau conducteur électronique réagit peu ou pas avec le premier matériau électrochrome de stockage protonique, ou encore que le matériau conducteur électronique est inerte vis-à-vis du premier matériau électrochrome de stockage protonique.

De manière générale, dans la présente, on entend généralement qu'un premier matériau est chimiquement compatible avec un deuxième matériau, lorsque ce premier matériau réagit peu ou pas avec le deuxième matériau, ou encore que le premier matériau est inerte vis-à-vis du deuxième matériau.

Avantageusement, ledit substrat lorsqu'il est en un matériau non conducteur électronique peut être en un matériau choisi parmi les matériaux résistants mécaniquement et chimiquement aux sollicitations du milieu extérieur (par exemple dans l'espace) et chimiquement compatibles vis-à-vis d'un fonctionnement protonique et notamment chimiquement compatibles vis-à-vis du premier matériau électrochrome de stockage protonique, de préférence ledit matériau non conducteur électronique est choisi parmi les verres et les polymères organiques résistants mécaniquement et chimiquement, tels que le Poly (Téréphtalate d'éthylène) ou PET.

Avantageusement, la couche en un matériau conducteur électronique peut être en un matériau choisi parmi les matériaux résistants mécaniquement et chimiquement aux sollicitations du milieu extérieur (par exemple dans l'espace), et chimiquement compatibles vis-à-vis d'un fonctionnement protonique et notamment chimiquement compatibles vis-à-vis du premier matériau électrochrome de stockage protonique, de préférence ledit matériau conducteur électronique est choisi parmi les métaux tels que l'aluminium, le platine, le chrome et leurs alliages ; et les oxydes métalliques conducteurs électroniques tels que l'oxyde d'indium dopé à l'étain ou ITO et l'oxyde d'étain dopé au fluor ou FTO.

Avantageusement, le premier matériau électrochrome de stockage protonique peut être choisi parmi les matériaux électrochromes de stockage protonique chimiquement compatibles vis-à-vis d'un fonctionnement protonique, notamment chimiquement compatibles vis-à-vis de l'électrolyte conducteur protonique et isolant électronique, de préférence le premier matériau électrochrome de stockage protonique peut être choisi parmi les oxydes métalliques hydratés de préférence amorphes tels que l'oxyde de tungstène hydraté HₓWO₃.nH₂O, ou x est compris entre 0 et 1, et n est un nombre entier de 1 à 2, et les mélanges de deux ou plus desdits oxydes.

Avantageusement, l'électrolyte conducteur protonique et isolant électronique peut être choisi parmi les électrolytes conducteurs protoniques et isolants électroniques chimiquement compatible vis-à-vis d'un fonctionnement protonique, notamment chimiquement compatibles (inertes) vis-à-vis de l'oxyde de tungstène cristallisé HₓWO₃-c (oxyde de tungstène protoné) ou de l'oxyde de tungstène cristallisé hydraté HₓWO₃.nH₂O-c, de préférence l'électrolyte conducteur protonique et isolant électronique peut être choisi parmi les oxydes métalliques hydratés, de préférence amorphes tels que l'oxyde de tantale Ta₂O₅ hydraté amorphe, l'oxyde de zirconium hydraté amorphe et les mélanges de deux ou plus desdits oxydes.

L'électrolyte est hydraté et amorphe afin qu'il puisse facilement transporter les protons du matériau de stockage vers le matériau actif en réflexion infrarouge. L'oxyde métallique de l'électrolyte doit généralement être différent de l'oxyde de tungstène.

Avantageusement, la couche de protection transparente aux rayons infrarouges, peut être en un matériau choisi parmi les matériaux compatibles vis-à-vis d'un fonctionnement protonique, notamment chimiquement compatibles vis-à-vis de l'oxyde de tungstène cristallisé HₓWO₃-c ou de l'oxyde de tungstène cristallisé hydraté HₓWO₃.nH₂O-c, de préférence la couche de protection transparente aux rayons infrarouges peut être en un matériau choisi parmi les matériaux inorganiques non toxiques, de préférence parmi les oxydes de métaux et de métalloïdes, de préférence, denses, tels que l'oxyde de cérium CeO₂, l'oxyde d'yttrium Y₂O₃, la silice SiO₂ et les mélanges de deux ou plus desdits oxydes de métaux ou de métalloïdes.

Par oxydes de métaux ou de métalloïdes denses, on entend généralement que ces oxydes ont une densité supérieure à 99% de la densité théorique.

Avantageusement, le substrat (conducteur électronique ou non) a une épaisseur de 0,175 mm à 1 mm.

Avantageusement, la couche en un matériau conducteur électronique qui recouvre le substrat lorsque celui-ci est un substrat en un matériau non conducteur électronique, a une épaisseur de 50 à 150 nm.

Avantageusement, la couche en un premier matériau électrochrome de stockage protonique a une épaisseur de 0,2 à 1 µm, de préférence de 0,4 à 1 µm.

Avantageusement, la couche en un électrolyte conducteur protonique et isolant électronique a une épaisseur de 0,2 à 1 µm, de préférence de 0,4 à 1 µm.

Avantageusement, la couche en oxyde de tungstène WO_{3-y} a une épaisseur 0,2 à 0,5 µm, de préférence de 0,4 à 0,5 µm.

Avantageusement, la couche d'un second matériau électrochrome a une épaisseur 0,2 à 1 µm, de préférence de 0,3 à 0,8 µm.

Avantageusement, la couche de protection transparente aux rayons infrarouges a une épaisseur de 0,1 à 1 µm, de préférence de 0,4 à 1 µm.

Le dispositif selon l'invention comprend un empilement spécifique de couches spécifiques dans un ordre spécifique qui n'a jamais été décrit dans l'art antérieur tel que représenté notamment par les documents relatifs à des dispositifs électrochromes « tout-solide » mentionnés plus haut.

Le dispositif selon l'invention peut être défini comme un dispositif tout-solide électrochrome à réflexion ou émissivité modulable dans l'infrarouge (IR) en particulier dans l'infrarouge moyen (longueurs d'onde de 1,5 à 20 µm) et notamment dans la bande II (longueur d'onde de 3 à 5 µm) et/ou dans la bande III (longueur d'onde de 8 à 12 µm) du spectre infrarouge, dont la partie active est un bicouche, que l'on pourrait aussi appeler électrode composite ou bicouche, à base d'oxyde de tungstène qui est selon l'invention située en face avant du dispositif.

La gamme de longueurs d'ondes d'intérêt préférée pour le dispositif selon l'invention se situe en effet dans le moyen infrarouge (« MIR ») c'est-à-dire dans une gamme de longueurs d'onde de 1,5 à 20 µm, notamment de 2 à 20 µm, qui est une gamme privilégiée pour les applications spatiales alors que pour des applications de type vitrage, les gammes de longueur d'onde d'intérêt se situent dans le Visible - Proche Infrarouge.

Le fait de disposer la partie active du dispositif électrochrome et notamment la couche du second matériau électrochrome à taux d'intercalation protonique variable, en face avant du dispositif, c'est-à-dire du côté du dispositif qui est directement exposé aux rayons infrarouges n'a jamais été décrit jusqu'alors dans les dispositifs « tout-solide » et est à l'origine de nombre des avantages du dispositif selon l'invention.

En effet, ce bicouche, cette électrode composite, exposé directement au rayonnement IR, est capable, par insertion électrochimique réversible de protons (qui ont été préférés aux ions lithium pour des raisons cinétiques), de moduler l'émissivité infrarouge totale du système comme cela est largement démontré dans les exemples fournis plus loin, et cela indépendamment des autres constituants sous-jacents de l'empilement.

La couche active du second matériau électrochrome à taux d'intercalation protonique variable, constitue la première couche de la face avant du dispositif. Aucun obstacle, tel qu'une électrode, ne fait donc obstacle à son exposition aux rayons infrarouges, et aucune perte optique n'est créée, car la couche d'oxyde de tungstène formant la seconde électrode est disposée sur la face de la couche active du second matériau électrochrome opposée à la face exposée aux rayonnements infrarouges.

Dans le dispositif selon l'invention, on surmonte l'un des inconvénients majeurs des dispositifs « tout-solide » de l'art antérieur dans lesquels la couche active est disposée sous une électrode, qui doit être obligatoirement transparente aux rayonnements infrarouges avec toutes les difficultés de réalisation que cela implique.

En particulier, le dispositif selon l'invention ne comporte pas de grille d'or, ce qui simplifie grandement la fabrication du dispositif selon l'invention et en abaisse grandement le coût.

Plus précisément, on fournit selon l'invention, pour la première fois, un dispositif tout-solide, non organique, qui ne comporte pas d'électrode transparente aux rayonnements infrarouges telle qu'une grille d'or.

En d'autres termes, les performances optiques du dispositif selon l'invention sont produites par les propriétés électroniques intrinsèques du matériau actif électrochrome situé en face avant de l'empilement.

On peut ainsi bénéficier de la réponse optique optimale du système, indépendamment des couches situées derrière la face avant.

On peut dire que le dispositif selon l'invention est réalisé selon une conception optimisée qui n'a jamais été décrite ni suggérée dans l'art antérieur relatif aux dispositifs « tout-solide ».

Le dispositif selon l'invention est, en outre, caractérisé en ce qu'il comprend un bicouche, que l'on pourrait aussi appeler électrode composite ou bicouche, constitué d'une couche d'oxyde de tungstène active, électrochrome, réflectrice, cristallisée et/ou hydratée de formule HₓWO₃-c ou WO₃.nH₂O-c à taux d'intercalation protonique (défini par x) variable en fonction de la tension appliquée (bornes comprises généralement entre +3 et -3 Volts).

Cette couche active, électrochrome est selon l'invention elle-même déposée sur une couche d'oxyde de tungstène sous-stoechiométrique absorbante de formule WO_{3-y}.

Le bicouche produit à lui-seul un contraste optique variable dans l'infrarouge, de préférence dans le moyen infrarouge (2 à 50 µm).

Dans le dispositif selon l'invention, l'effet technique produit par la nature différente des deux couches qui constituent le bicouche n'est pas d'accroître l'absorption du dispositif qui est fixée par la couche de WO_{3-y}, mais au contraire de la diminuer par augmentation de la réflexion de la couche d'un second matériau électrochrome HₓWO₃-c ou WO₃.nH₂O-c. Ce second matériau électrochrome est nécessairement à l'état cristallisé afin qu'une augmentation du taux d'intercalation d'ions x (ici il s'agit généralement de protons H⁺) produise dans la couche de ce second matériau électrochrome une augmentation de la réflexion infrarouge R.

En d'autres termes, la couche du second matériau électrochrome HₓWO₃-c ou WO₃.nH₂O-c devient réflectrice lorsqu'elle est intercalée, accroissant ainsi la modulation d'émissivité du dispositif.

Dans ce bicouche ou électrode composite, la sous-couche de WO_{3-y} qui est une électrode poreuse, joue un triple rôle :
- elle assure un fond absorbant optique au système ;
- elle permet la diffusion des protons ;
- elle assure un apport électronique dans le matériau actif HₓWO₃-c.

On peut dire que la sous-couche de WO_{3-y} du bicouche ou électrode composite possède une fonction « 3 en 1 », ce qui permet par exemple d'utiliser une seule cible de tungstène pour réaliser un empilement simplifié. Un autre matériau par exemple sous la forme d'une grille d'or n'est, en effet, pas nécessaire pour amener les électrons dans le matériau actif HₓWO₃-c ou WO₃.nH₂O-c.

La sous-couche de WO_{3-y} est dans un état sous-stoechiométrique, elle est nécessairement non-électrochrome, et elle sert de référence optique absorbante infrarouge par rapport à une couche supérieure active dans l'infrarouge. La sous-couche de WO_{3-y} est de préférence absorbante dans le moyen infrarouge.

Le dispositif « tout-solide » selon l'invention est compatible avec toutes les exigences qui régissent une utilisation dans l'espace, en effet les matériaux entièrement inorganiques qui le constituent lui permettent de résister aux agressions UV, au vide et aux températures élevées, par exemple voisines de 100°C, au contraire des dispositifs souples existants dont les électrolytes gels supportent mal une mise sous vide et dont les polymères se déforment sous l'effet de la chaleur et sont peu résistants au UV.

Le dispositif selon l'invention peut être qualifié, de dispositif électrochrome robuste, durable, de conception simplifiée.

Le dispositif selon l'invention présente, en outre, l'avantage de pouvoir être réalisé très simplement, en un nombre limité d'étapes, par un seul et même procédé de dépôt pour toutes les couches.

Le dispositif selon l'invention peut donc être réalisé en une durée réduite et avec des coûts réduits.

Ainsi, le dispositif selon l'invention peut être entièrement réalisé sous vide à l'aide d'une même technologie de dépôt physique en phase vapeur (« *PVD »* ou « *Physical Vapour Deposition* » en anglais) choisi par exemple parmi la pulvérisation cathodique, l'ablation laser, ou l'évaporation.

L'invention concerne, en outre, un bicouche pour un dispositif électrochrome comprenant une couche d'un oxyde de tungstène sous stoechiométrique, non électrochrome, WO_{3-y} où y est compris entre 0,2 et 1, optiquement absorbante dans l'infrarouge (de préférence dans le moyen infrarouge), conductrice électronique, poreuse, formant une électrode ; ladite couche d'oxyde de tungstène WO_{3-y} étant disposée sous une couche à réflexion variable dans l'infrarouge, d'un second matériau électrochrome à taux d'intercalation protonique variable, choisi parmi l'oxyde de tungstène cristallisé HₓWO₃-c où x est compris entre 0 et 1, et l'oxyde de tungstène cristallisé hydraté HₓWO₃.nH₂O-c où x est compris entre 0 et 1 et n est un nombre entier de 1 à 2.

Les avantages liés à la structure et à la composition spécifique de ce bicouche ont pour la plupart déjà été exposés plus haut dans le cadre de la description du dispositif.

L'invention concerne aussi un procédé de préparation du dispositif selon l'invention, tel que décrit plus haut, dans lequel on réalise les étapes successives suivantes :
a) on dépose une couche en un premier matériau électrochrome de stockage protonique sur un substrat en un matériau conducteur électronique, ou sur une couche en un matériau conducteur électronique disposée sur un substrat en un matériau non conducteur électronique ledit substrat en un matériau conducteur électronique ou ladite couche en un matériau conducteur électronique formant une première électrode ;
b) on dépose une couche d'un électrolyte conducteur protonique et isolant électronique sur la couche en un premier matériau électrochrome de stockage protonique ;
c) on dépose une couche d'un oxyde de tungstène sous stoechiométrique, non-électrochrome, WO_{3-y} où y est compris entre 0,2 et 1, optiquement absorbante dans l'infrarouge, conductrice électronique, poreuse, formant une seconde électrode, sur la couche d'un électrolyte conducteur protonique et isolant électronique ;
d) on dépose une couche à réflexion variable dans l'infrarouge d'un second matériau électrochrome à taux d'intercalation protonique variable, choisi parmi l'oxyde de tungstène cristallisé HₓWO₃-c où x est compris entre 0 et 1 et l'oxyde de tungstène cristallisé hydraté HₓWO₃.nH₂O-c où x est compris entre 0 et 1 et n est un nombre entier de 1 à 2, sur la couche d'un oxyde de tungstène sous stoechiométrique, non-électrochrome, WO_{3-y};
e) on dépose une couche de protection, transparente aux rayons infrarouges, en un matériau inorganique, sur la couche à réflexion variable dans l'infrarouge d'un second matériau électrochrome.

Le procédé selon l'invention est fiable et beaucoup plus simple que les procédés de l'art antérieur.

Avantageusement, les couches sont déposées par un procédé de dépôt Physique en phase vapeur ou PVD choisi parmi la pulvérisation cathodique, l'ablation laser et l'évaporation.

Avantageusement, toutes les couches sont déposées sous vide par un même procédé de dépôt physique en phase vapeur, de préférence par pulvérisation cathodique magnétron réactive.

Pour des raisons technico-économiques, la pulvérisation cathodique magnétron en mode réactif sera privilégiée car elle assure notamment un bon contrôle du taux d'oxygène dans le plasma, des vitesses de dépôt élevées, par exemple d'environ 60 nm/min, une bonne qualité optique du matériau actif.

En outre, elle permet de préparer le matériau cristallisé HₓWO₃-c ou HₓWO₃.nH₂O-c en face avant sans échauffer le reste de l'empilement.

Avantageusement, toutes les étapes sont réalisées dans une même enceinte sous vide, sans ouverture de l'enceinte entre chacune des étapes, ce qui occasionne une simplification importante du procédé, un gain de temps important sans perte de protons, et des coûts réduits.

L'invention concerne, en outre, l'utilisation du dispositif tel que décrit plus haut pour la protection thermique d'un objet.

Cet objet peut être notamment un véhicule et notamment un véhicule spatial tel qu'un satellite.

L'utilisation du dispositif selon l'invention est particulièrement avantageuse dans le cas de véhicules tels que les satellites soumis à des contraintes, limitations sur leur masse embarquée. En effet, le dispositif selon l'invention est d'une faible masse et permet un gain de masse important par rapport aux dispositifs, par exemple les dispositifs mécaniques, couramment mis en oeuvre pour la protection thermique, notamment dans les satellites.

D'autres avantages de l'invention apparaîtront mieux à la lecture de la description détaillée qui va suivre faite en relation avec les dessins joints.

### BRÈVE DESCRIPTION DES DESSINS

- La Figure 1 est une vue schématique du dispositif selon l'invention.
- La Figure 2 est un graphique qui représente la résistivité (en 10⁻² Ohm.cm) de la sous couche WO_{3-y} en fonction du débit d'oxygène (en sccm) introduit dans l'enceinte du bâti de l'appareil de pulvérisation cathodique magnétron lors du dépôt de cette couche par cette technique.
- La Figure 3 est un graphique qui illustre le pilotage électrochimique du matériau actif HₓWO₃-c, entre 0,2 V (x = 0) et -0,8 V (x = 0,5), par rapport à une électrode de référence de type ECS en milieu H₃PO₄ - 0,1 M.
   En ordonnée est porté le coefficient de réflexion totale R_{T} dans le domaine de l'infrarouge de la partie active de l'empilement HₓWO₃-c (320 nm) / WO_{3-y} (400 nm) / verre et, en abscisse est portée la longueur d'onde λ (en µm) du rayonnement infrarouge.
   Les courbes A, B, C, D, E, F, G correspondent respectivement à des valeurs de x de 0 ; 0,05 ; 0,1 ; 0,2 ; 0,25 ; 0,35 ; et 0,5.

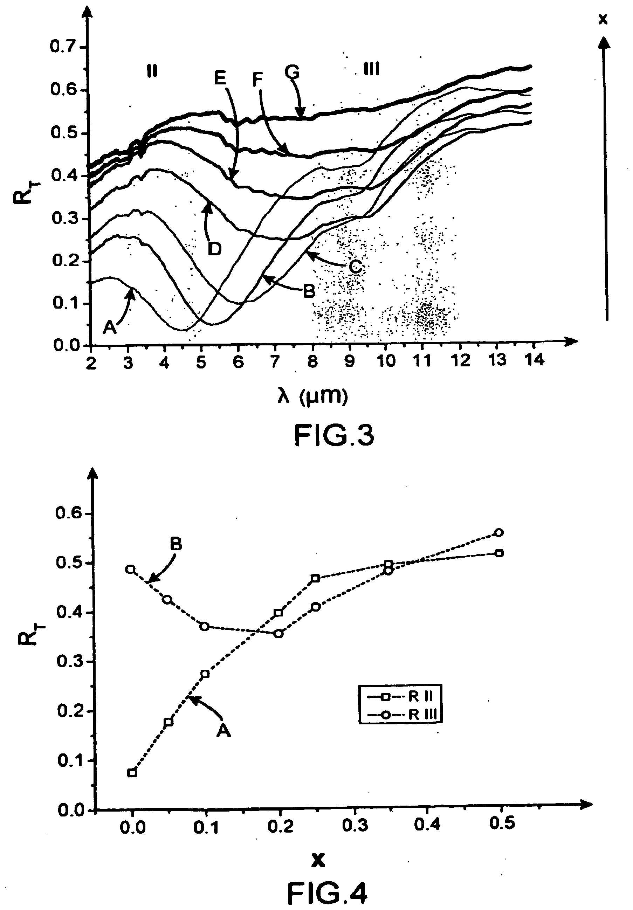

- La Figure 4 est un graphique qui donne la moyenne du coefficient de réflexion totale R_{T} produite par la partie active de l'empilement HₓWO₃-c (320 nm) / WO_{3-y} (400 nm) / verre dans les bandes II (courbe A) et III (courbe B), en fonction du taux d'intercalation x dans HₓWO₃-c.

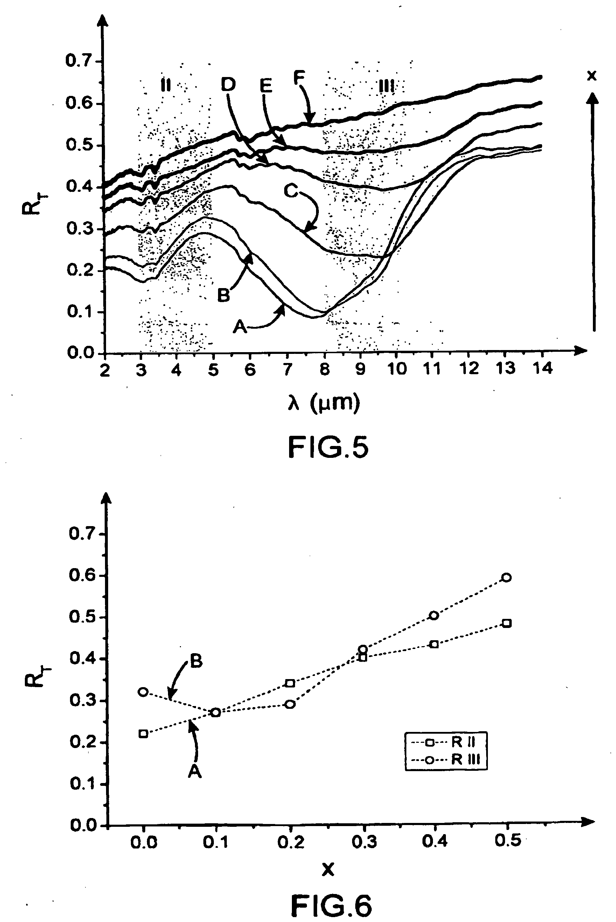

- La Figure 5 est un graphique qui illustre le pilotage électrochimique du matériau actif HₓWO₃-c, entre 0,2 V (x = 0) et -0,8 V (x = 0,5), par rapport à une électrode de référence de type ECS en milieu H₃PO₄-0,1 M.
   En ordonnée est porté le coefficient de réflexion totale R_{T} dans le domaine de l'infrarouge de la partie active de l'empilement HₓWO₃-c (560 nm) / WO_{3-y} (400 nm) / verre et, en abscisse est portée la longueur d'onde λ (en µm) du rayonnement infrarouge.
   Les courbes A, B, C, D, E, F correspondent respectivement à des valeurs de x de 0 ; 0,1 ; 0,2 ; 0,3 ; 0,4 ; et 0,5.
- La Figure 6 est un graphique qui donne la moyenne du coefficient de réflexion totale R_{T} produite par la partie active de l'empilement HₓWO₃-c (560 nm) / WO_{3-y} (400 nm) / verre dans les bandes II (courbe A) et III (courbe B), en fonction du taux d'intercalation x dans HₓWO₃-c.

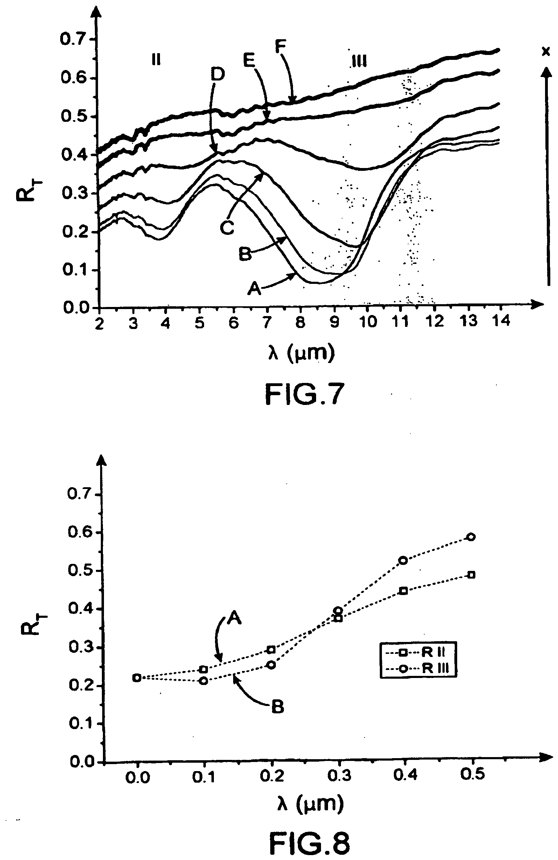

- La Figure 7 est un graphique qui illustre le pilotage électrochimique du matériau actif HₓWO₃-c, entre 0,2 V (x = 0) et -0,8 V (x = 0,5), par rapport à une électrode de référence de type ECS en milieu H₃PO₄-0,1M.
   En ordonnée est porté le coefficient de réflexion totale R_{T} dans le domaine de l'infrarouge de la partie active de l'empilement HₓWO₃-c (730 nm) / WO_{3-y} (400 nm) / verre et en abscisse est portée la longueur d'onde λ (en µm) du rayonnement infrarouge.
   Les courbes A, B, C, D, E, F correspondent respectivement à des valeurs de x de 0 ; 0,1 ; 0,2 ; 0,3 ; 0,4 ; et 0,5.
- La Figure 8 est un graphique qui donne la moyenne du coefficient de réflexion totale R_{T} produite par la partie active de l'empilement HₓWO₃-c (730 nm) / WO_{3-y} (400 nm) / verre dans les bandes II (courbe A) et III (courbe B), en fonction du taux d'intercalation x dans HₓWO₃-c.

### EXPOSÉ DÉTAILLÉ DE MODES DE RÉALISATION PARTICULIERS

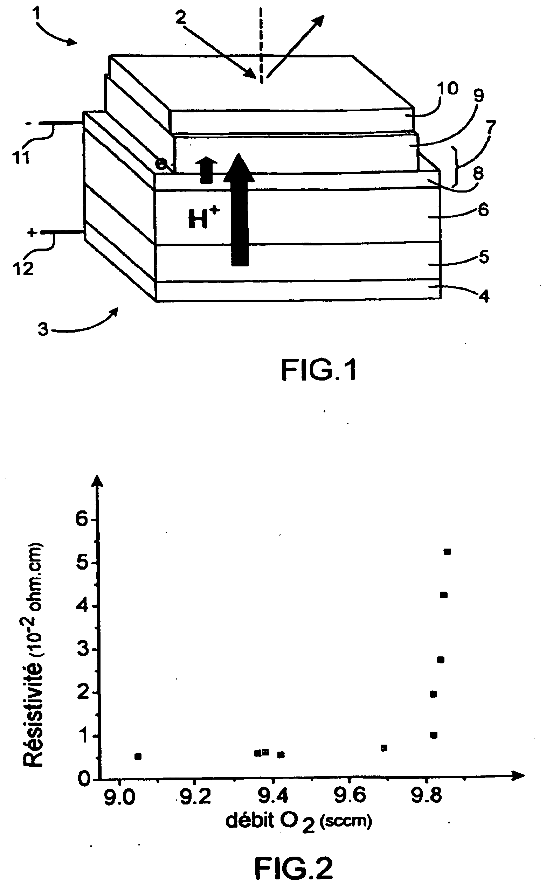

La Figure 1 représente un dispositif selon l'invention comprenant le bicouche spécifique selon l'invention.

Ce dispositif comporte une face avant (1) exposée au rayonnement infrarouge (2) et une face arrière (3) qui n'est pas exposée directement aux rayons infrarouges.

Le dispositif selon l'invention comprend tout d'abord un substrat ou support (4), qui joue essentiellement un rôle de support métallique du dispositif.

Le substrat ou support (4) ne présente généralement pas de transparence aux rayons infrarouges.

Le substrat ou support est généralement en un matériau léger.

Ce substrat ou support (4) peut être en un matériau choisi parmi les métaux, les verres tels que le verre de lame de microscope, et les polymères organiques qui présentent une rigidité suffisante, tels que le Poly (téréphtalate d'éthylène) ou PET.

Les métaux qui peuvent constituer le substrat ou support (4), peuvent être choisis par exemple, parmi l'aluminium, le platine, le chrome, et leurs alliages.

Dans le cas où le substrat ou support (4) est en un matériau qui n'est pas conducteur électronique tel que le verre ou le PET, alors une couche en un matériau conducteur électronique est déposée sur le substrat ou plus exactement sur la surface supérieure de celui-ci.

Cette couche en un matériau conducteur électronique joue le rôle d'électrode reliée à l'alimentation du dispositif.

Ce matériau conducteur électronique est généralement choisi parmi les métaux, et les oxydes métalliques conducteurs électroniques.

Les métaux qui peuvent constituer la couche en un matériau conducteur électronique peuvent être choisis parmi les métaux déjà cités plus haut qui peuvent constituer le substrat ou support.

Les oxydes métalliques conducteurs électroniques sont bien connus de l'homme du métier.
- Des exemples de tels oxydes conducteurs sont l'oxyde d'indium dopé à l'étain (« Indium Tin Oxide » ou ITO en anglais), l'oxyde d'étain SnO₂ dopé ou fluor (« Fluor Tin Oxide » ou FTO en anglais).

Le matériau conducteur électronique de ladite couche, notamment lorsqu'il s'agit d'un oxyde métallique conducteur électronique est généralement choisi parmi les matériaux qui peuvent être déposés en couche mince par un procédé PVD, tel que la pulvérisation cathodique, l'ablation laser ou l'évaporation, et de préférence parmi les matériaux qui peuvent être déposés en couche mince par pulvérisation cathodique.

Dans le cas où le substrat ou support est en un matériau qui est conducteur électronique tel qu'un métal, alors il n'est pas nécessaire qu'une couche en un matériau conducteur électronique soit déposée sur le substrat.

Le support ou substrat (4), que l'on peut alors qualifier de substrat « monobloc », joue dans ce cas à la fois le rôle de support mécanique du dispositif déjà indiqué plus haut et le rôle d'électrode reliée à l'alimentation du dispositif.

Sur la Figure 1, c'est ce mode de réalisation, sans couche en un matériau conducteur électronique sur le substrat, qui est représenté.

Il est important que le matériau qui constitue la couche en un matériau conducteur électronique lorsque celle-ci est présente, ou le matériau conducteur électronique qui constitue le substrat lorsque ladite couche n'est pas présente, soit chimiquement compatible avec le matériau de la couche d'un premier matériau électrochrome de stockage protonique (5) déposée sur le substrat ou sur la couche en un matériau conducteur électronique.

On choisira donc le matériau qui constitue la couche en un matériau conducteur électronique, ou le matériau conducteur électronique qui constitue le substrat de manière à ce qu'il soit chimiquement compatible avec un milieu protoné, tel qu'un oxyde métallique hydraté.

Le substrat (4) a généralement une épaisseur de 0,175 à 1 mm.

Le substrat (4) se présente généralement sous la forme d'une feuille de matériau léger.

Ainsi, l'épaisseur du substrat (4) est généralement d'environ 1 mm dans le cas d'un substrat en verre et d'environ 175 µm dans le cas d'un substrat en polymère, par exemple d'un substrat en PET.

La couche en un matériau conducteur électronique éventuelle a généralement une épaisseur de 50 à 150 nm.

Sur le substrat ou la couche en un matériau conducteur électronique est disposée une couche en un premier matériau électrochrome de stockage protonique (5). Cette couche peut aussi être dénommée contre-électrode réservoir de protons.

Le premier matériau électrochrome de stockage protonique peut être choisi parmi tous les oxydes métalliques hydratés électrochromes, et les mélanges de deux ou plus de ces oxydes.

Des exemples de tels oxydes sont l'oxyde de tungstène hydraté HₓWO₃.nH₂O, où x est compris entre 0 et 1 (0 et 1 inclus), et n est un nombre entier de 1 à 2, par exemple n = 1.

Le choix de ce dernier oxyde analogue à celui du bicouche, présente l'avantage de simplifier encore le procédé de préparation du dispositif selon l'invention en réduisant le nombre de cibles, précurseurs mis en oeuvre.

Le premier matériau électrochrome de stockage protonique est généralement choisi parmi les matériaux qui peuvent être déposés en couche mince par un procédé PVD tel que la pulvérisation cathodique, l'ablation laser ou l'évaporation, et de préférence parmi les matériaux qui peuvent être déposés en couche mince par pulvérisation cathodique.

On choisira le premier matériau électrochrome de stockage protonique de manière à ce qu'il soit chimiquement compatible avec l'électrolyte conducteur protonique déposé sur la couche de premier matériau électrochrome.

La couche en un premier matériau électrochrome de stockage protonique (5) a généralement une épaisseur de 0,2 à 1 µm, de préférence de 0,4 à 1 µm.

Sur la couche en un premier matériau électrochrome de stockage protonique (5) est disposée une couche en un électrolyte conducteur protonique et isolant électronique (6).

Cet électrolyte conducteur protonique peut être choisi parmi tous les oxydes métalliques hydratés, de préférence amorphes, et les mélanges de deux ou plus de ces oxydes.

En effet, les oxydes amorphes conduisent bien mieux les protons.

Des exemples de tels oxydes sont l'oxyde de tantale Ta₂O₅ hydraté amorphe et l'oxyde de zirconium hydraté amorphe.

La couche en un électrolyte conducteur protonique et isolant électronique (6) a généralement une épaisseur de 0,2 à 1 µm, de préférence de 0,4 à 1 µm.

Sur la couche en un électrolyte conducteur protonique (6) est disposée le bicouche que l'on peut aussi appeler électrode bicouche ou électrode composite (7) selon l'invention.

Tout d'abord, sur la couche en un électrolyte conducteur protonique est disposée une couche d'un oxyde de tungstène WO_{3-y} où y est compris entre 0,2 et 1 sous stoechiométrique, non électrochrome, optiquement absorbante dans l'infrarouge (8), formant une seconde électrode conductrice électronique reliée à l'alimentation du dispositif.

Cette couche d'oxyde de tungstène est chimiquement compatible avec les matériaux qui l'entourent, à savoir avec l'électrolyte conducteur protonique de la couche sous-jacente (6) et avec l'oxyde de tungstène cristallisé éventuellement hydraté HₓWO₃-c ou HₓWO₃.nH₂O-c de la couche immédiatement supérieure (9) de l'empilement de couches du dispositif.

Cette couche d'un oxyde de tungstène WO_{3-y} (8), est une couche poreuse, avec une taille de pores submicronique, par exemple de 10 à 100 nm.

Le rôle de cette couche d'oxyde de tungstène WO_{3-y} (8) est triple.

Ce rôle est en effet d'assurer un fond absorbant optique au système, tout en permettant la diffusion des protons et un apport électronique dans le matériau actif HₓWO₃-c ou HₓWO₃.nH₂O-c.

La couche en oxyde de tungstène WO_{3-y} (8) a généralement une épaisseur de 0,2 à 0,5 µm, de préférence de 0,4 à 0,5 µm.

En effet, l'épaisseur de la couche d'oxyde de tungstène WO_{3-y} (8) doit généralement être inférieure ou égale à 500 nm pour être perméable aux protons. En revanche, cette épaisseur doit généralement être supérieure à 200 nm pour constituer un fond absorbant, ce qui permet de découpler la fonction optique de la face avant du dispositif constituée essentiellement par le bicouche (7), de la fonction électrochimique conférée par le reste de l'empilement, sous la couche d' oxyde de tungstène WO_{3-y} (8) .

Sur la couche d'oxyde de tungstène WO_{3-y}, (8) est disposée une couche (9) en un second matériau électrochrome choisi parmi l'oxyde de tungstène cristallisé HₓWO₃-c où x est compris entre 0 et 1 et l'oxyde de tungstène cristallisé hydraté HₓWO₃.nH₂O-c où x est compris entre 0 et 1 et n est compris entre 1 et 2.

Cette couche en un second matériau électrochrome (9) est généralement une couche poreuse avec une porosité submicronique, par exemple de 10 à 100 nm.

Cette couche en un second matériau électrochrome (9) est une couche à réflexion variable vis-à-vis des rayons IR.

Dans cette couche, le matériau actif est un oxyde de tungstène cristallisé représenté par la formule HₓWO₃-c, qui peut être hydraté afin d'en améliorer les performances, et essentiellement la conductivité protonique.

Cet oxyde de tungstène cristallisé hydraté est représenté par la formule HₓWO₃.nH₂O-c.

Dans ces formules, x qui représente le taux d'intercalation du matériau actif HₓWO₃-c ou HₓWO₃.nH₂O-c est variable et est généralement compris entre 0 et 1 (0 et 1 inclus), tandis que n est généralement compris entre 1 et 2 (1 et 2 inclus).

La réponse optique du dispositif suit très finement les variations de x, avec une modulation possible à 0,05 près, du fait de la capacité des couches inorganiques à conserver leur taux de protons, encore appelée « effet mémoire ».

En d'autres termes, les propriétés optiques, la réponse optique, de la couche d'oxyde de tungstène active, électrochrome, réflectrice, cristallisée et/ou hydratée de formule HₓWO₃-c ou WO₃.nH₂O-c (9) peuvent être facilement modulées en fonction du taux d'intercalation protonique (défini par x) qui est lui-même variable en fonction de la tension appliquée.

Ainsi en modifiant cette tension, on pourra agir à volonté sur les propriétés optiques du dispositif. Par exemple, pour une tension appliquée de 0,2 V, x = 0, et pour une tension appliquée de - 0,8 V, x = 0,5.

Il est à noter que l'oxyde de tungstène WO₃, qui constitue la partie active de l'empilement du dispositif selon l'invention est un matériau capable de fonctionner avec des ions lithium et/ou avec des protons.

Selon l'invention, on choisit de faire fonctionner l'oxyde de tungstène WO₃ avec des protons plutôt qu'avec des ions Li⁺, pour des raisons liées à la cinétique.

En effet, les dispositifs « tout-solide » tels que le dispositif selon l'invention étant plus lents que les dispositifs souples, il est préférable de travailler avec un second matériau électrochrome protonique, avec un électrolyte inorganique au proton par exemple de type oxyde de tantale Ta₂O₃ hydraté, et enfin avec une contre-électrode inorganique également au proton.

La couche en second matériau actif électrochrome (9) a généralement une épaisseur de 0,2 à 1 µm, de préférence de 0,3 à 0,8 µm.

Les propriétés optiques du dispositif sont adaptables dans le moyen infrarouge avec l'épaisseur de matériau actif HₓWO₃-c, ou HₓWO₃.nH₂O-c notamment sur les bandes II 3-5 µm) et III (8-12 um) de transparence de l'atmosphère.

Par exemple, une faible épaisseur (par exemple environ 300 nm) de matériau actif (9) donnera une modulation privilégiée de la réflexion totale dans la bande II tandis qu'une épaisseur élevée (par exemple environ 700 à 800 nm) de matériau actif donnera une modulation privilégiée de la réflexion totale dans la bande III.

En résumé, les propriétés optiques, le contraste optique, du dispositif selon l'invention peuvent être modulés dans l'infrarouge et notamment dans l'infrarouge moyen en faisant varier x et l'épaisseur du matériau actif HₓWO₃-c ou HₓWO₃.nH₂O-c.

Sur la couche en second matériau actif électrochrome (9) est disposée une couche (10) de protection de l'empilement, transparente aux rayons infrarouges, et de préférence réfléchissante vis-à-vis du rayonnement solaire.

Cette couche (10) peut aussi être appelée couche d'encapsulation.

En effet, cette couche (10) est déposée lors d'une étape finale sur l'ensemble de l'empilement décrit plus haut afin de conserver la teneur en ions (protons) à l'intérieur du dispositif, et de servir ainsi de matériau d'encapsulation.

Par transparente aux rayons infrarouges, on entend généralement que cette couche (10) est transparente aux rayons infrarouges de longueurs d'ondes comprises entre 1,5 µm et 20 pm, de préférence entre 3 µm et 12 µm.

Par faible indice de réfraction, on entend généralement que cette couche (10) a un indice de réfraction entre 1 et 2.

Cette couche (10) est généralement en un matériau inorganique non toxique.

De préférence, cette couche (10) est en un matériau choisi parmi les oxydes de métaux et de métalloïdes, et les mélanges de deux ou plus de ces oxydes de métaux et oxydes de métalloïdes.

Ce ou ces oxyde(s) de métaux ou de métalloïdes, de préférence amorphes, sont choisis de préférence parmi les oxydes qui peuvent être facilement déposés par PVD à partir d'une cible d'oxyde ou de métal, tel que l'oxyde de cérium CeO₂, l'oxyde d'yttrium Y₂O₃, ou SiO₂.

La couche (10) de protection de l'empilement a généralement une épaisseur 0,1 à 1 µm, de préférence de 0,4 à 1 µm.

Le dispositif selon l'invention comprend, en outre, des moyens (11, 12) pour établir une tension variable entre les électrodes, par exemple une tension variable entre +3 Volts et -3 Volts.

Le dispositif selon l'invention est préparé par le procédé décrit plus haut.

L'appareil utilisé pour mettre en oeuvre le procédé selon l'invention pour préparer le dispositif selon l'invention peut être par exemple un bâti de dépôt sous vide (Physical Vapour Deposition ou « PVD » en anglais) comprenant :
- une enceinte sous vide, d'un volume par exemple de 0,1 m³ dans laquelle règne une pression initiale par exemple d'environ 5 10⁻⁷ mbar, la vitesse de pompage maximale pour réaliser le vide dans l'enceinte étant de 900 L/s avec une enceinte initialement remplie d'azote ;
- au plus 6 cathodes d'un diamètre de 3 pouces (ou 76 mm), ou bien 2 cathodes d'un diamètre 6 pouces (ou 152 mm) et 2 cathodes d'un diamètre de 3 pouces (ou 76 mm) ;
- chaque dépôt sera réalisé par pulvérisation cathodique magnétron à partir d'une cible métallique par exemple de Ir, Ta, W, ou Ce, avec une puissance appliquée de 1 à 2 W/cm², de préférence en mode DC pulsé, par exemple à 50kHz pendant 2 µs, afin d'obtenir des vitesses de dépôt élevées, par exemple de 60 à 100 nm/minute pour l'industrialisation du procédé qualifié de réactif.

Afin d'oxyder et/ou d'hydrater les matériaux en couches minces, le gaz plasmagène sera constitué d'un mélange d'argon (avec de l'hydrogène) et d'oxygène, injectés dans l'enceinte avec des débits par exemple de 70 sccm et de 9 à 20 sccm, respectivement.

Il est à noter que selon une des caractéristiques avantageuses de l'invention, le bicouche peut être préparé par un procédé de PVD, par exemple par pulvérisation cathodique magnétron réactive, à partir d'une seule cible de tungstène avec notamment une teneur en oxygène maîtrisée dans l'enceinte de dépôt. Dans ce cas où l'on opère avec une seule cible de tungstène, on obtient alors un oxyde WO_{3-y} sous-stoechiométrique.

Le taux d'oxygène de WO_{3-y}, déterminé par la valeur de y, qui est comprise, selon l'invention, entre 0,2 et 1, peut être parfaitement maîtrisé par le contrôle des paramètres de pulvérisation cathodique, à savoir par exemple :
- puissance appliquée de 400 W sur une cible de tungstène d'un diamètre 6 pouces ;
- tension de cathode comprise entre 500 et 520 Volts ;
- pression de gaz plasmagène élevée, comprise entre 2 et 2,3 10⁻² mbar, afin d'obtenir une couche poreuse.

Le taux d'oxygène de WO_{3-y} peut notamment être maîtrisé par la teneur en oxygène dans l'enceinte de dépôt dont le débit est finement contrôlé, par exemple à plus ou moins 0,1 sccm, par régulation optique du taux d'atomes de tungstène dans le plasma de dépôt. On utilise pour cela une photodiode pourvue d'un filtre à 400 nm qui est la longueur d'onde d'une des raies principales du W.

Ainsi par exemple, la valeur de y peut être comprise entre 0,1 (valeur non conforme à l'invention donnée à titre d'information), à savoir par exemple pour un débit de O₂ de 9,9 sccm, et 0,5 (valeur conforme à l'invention), à savoir par exemple pour un débit de O₂ de 9 sccm.

Le matériau actif HₓWO₃-c cristallisé sera obtenu avec un taux d'oxygène généralement fixé à 20 sccm par le débitmètre.

Les paramètres de dépôt seront par exemple :
- une densité de puissance appliquée sur cible de tungstène de 2 W/cm² ;
- une tension de cathode de 520 Volts ;
- une pression de gaz plasmagène tel qu'un mélange d'argon et d'oxygène de 2,5 10⁻² mbar.

De plus, le substrat sera généralement chauffé à 350°C avec une légère assistance ionique afin d'améliorer la cristallisation pendant le dépôt.

Cette assistance ionique peut consister par exemple en un bombardement par des ions Ar⁺ à 80 W en mode RF.

WO_{3 y} peut être également préparé par copulvérisation d'une cible de tungstène métallique W et d'une deuxième cible d'oxyde de tungstène stoechiométrique WO₃.

La proportion de mélange des matériaux W et WO₃ est alors ajustée en jouant sur la densité de puissance appliquée, en mode RF sous argon, à leurs cibles respectives, entre 1 et 2 W/cm², à faible vitesse de dépôt, par exemple 10 à 20 nm/min, afin d'obtenir une composition homogène.

On obtient ainsi une matrice de WO₃ stoechiométrique dans laquelle sont implantés des atomes de W métalliques, capables de percoler avec une teneur en W généralement au moins égale à 10%.

Ce matériau peut être qualifié de Cermet, il possède en effet les propriétés caractéristiques des Cermets, avec notamment une variation de conductivité typique des Cermets correspondant au seuil de percolation électronique (voir Exemple 1).

Il est à noter que HₓWO₃-c cristallisé peut être également déposé avec une cible de WO₃ en mode RF non réactif sous argon, mais avec une vitesse de dépôt beaucoup plus lente qu'avec le procédé réactif utilisant une cible de W métallique.

La vitesse de dépôt est généralement d'environ 12 nm/min en mode RF, au lieu d'environ 60 nm/min en mode DC.

Le dispositif selon l'invention inorganique, robuste et de conception simplifiée qui peut notamment fonctionner dans le moyen infrarouge trouve notamment son application dans la protection thermique des satellites.

Par exemple, on pourra utiliser des « patches » pour satellites composés de plusieurs dispositifs « tout-solide » électrochromes selon l'invention pour remplacer des volets mécaniques forts consommateurs d'énergie.

L'invention va maintenant être décrite en référence aux exemples suivants, donnés à titre illustratif et non limitatif.

### EXEMPLES

### Exemple 1.

Cet exemple illustre le contrôle des propriétés électroniques de la sous-couche de WO_{3-y}, et en particulier de sa résistivité, en maîtrisant le débit d'oxygène introduit dans l'enceinte du bâti de l'appareil de pulvérisation cathodique magnétron, lors du dépôt de cette sous-couche.

Cette sous-couche de WO_{3-y} est un élément fondamental du dispositif et du bicouche (électrode bicouche, composite) selon l'invention.

Le dépôt de WO_{3-y} est réalisé de préférence par la technique de pulvérisation cathodique magnétron, en mode DC pulsé réactif, à l'aide d'un bâti de dépôt sous vide (PVD).

Une puissance de 400 W est appliquée sur une cible de tungstène de diamètre 6 pouces.

La tension de la cathode est comprise entre 500 et 520 Volts, et la pression de gaz plasmagène, constitué par un mélange d'Argon et d'oxygène est comprise entre 2 et 2,3 10⁻² mbar.

Ce procédé produit avantageusement des couches minces poreuses, quand on utilise une pression de travail élevée, et à croissance rapide, par exemple d'environ 100 nm/min.

La Figure 2 démontre que les propriétés électroniques de la sous-couche de WO_{3-y} peuvent être effectivement maîtrisées à l'aide du débit d'oxygène introduit dans l'enceinte du bâti lors du dépôt de cette couche par pulvérisation cathodique magnétron. Sur la Figure 2, on constate que le matériau WO_{3-y} a une résistivité comprise entre 0,5 et 5 10⁻² Ω.cm lorsque le débit d'oxygène introduit dans l'enceinte, régulé par émission optique des atomes de tungstène, varie de 9,0 à 9,9 sccm (« standard cubic centimeter per minute ») avec un débit d'argon de 70 sccm.

Il apparaît que les propriétés électroniques de WO_{3-y} sont très sensibles au débit d'oxygène au-delà d'une valeur seuil de 9,8 sccm.

La Figure 2 montre en effet un seuil de transition des propriétés électroniques à 9,8 sccm (y = 0,25) correspondant à un maximum d'absorption optique (principe du CERMET).

En conséquence, afin d'assurer la reproductibilité des propriétés optiques de la sous-couche absorbante de WO_{3-y}, on utilise dans l'Exemple 2 qui suit une couche mince de WO_{3-y} (y = 0,5) voisine du CERMET optimal, et élaborée avec 9 sccm d'O₂.

### Exemple 2.

Dans cet exemple, on montre qu'une modulation de réflexion totale dans le domaine de l'infrarouge est effectivement obtenue en face avant de l'empilement « tout-solide » du dispositif selon l'invention.

Plus précisément, on illustre dans cet exemple qu'une modulation optique dans l'infrarouge (focalisée dans les bandes II et III du domaine IR) est réalisée en milieu liquide aqueux, à savoir un électrolyte légèrement acide comprenant H₃PO₄ à 0,1 M, par des empilements constitués par une bicouche HₓWO₃/ WO_{3-y} sur un substrat en verre.

Rappelons que la bande II du domaine infrarouge s'étend entre les longueurs d'ondes de 3 et 5 um, et que la bande III du domaine infrarouge s'étend entre les longueurs d'ondes de 8 et 12 µm.

Un tel empilement qui constitue la « face avant » du dispositif selon l'invention peut être considéré comme étant représentatif du fonctionnement d'un dispositif « tout-solide » au proton selon l'invention car les couches situées sous la couche de WO_{3-y} contribuent peu ou pas du tout aux propriétés optiques du dispositif selon l'invention.

Comme on l'a déjà précisé plus haut, on utilise dans les empilements mis en oeuvre dans cet exemple une couche mince de WO_{3-y} voisine du CERMET optimal, et élaborée avec 9 sccm d'O₂.

L'épaisseur du matériau WO_{3-y} doit être inférieure à 500 nm pour être perméable aux protons.

En revanche, elle doit être supérieure à 200 nm afin de constituer un fond absorbant (R_{surfacique} < 200 ohm par carré), découplant ainsi la fonction optique de la face avant HₓWO₃/ WO_{3-y} de la fonction électrochimique conférée par le reste de l'empilement.

Dans cet exemple, l'épaisseur de la couche de WO_{3-y} (y = 0,5) a donc été fixée à 400 nm.

La couche active de HₓWO₃-c est déposée dans la même enceinte de pulvérisation cathodique magnétron que la couche de WO_{3-y} sans ouverture de l'enceinte, à l'aide de la même cible de tungstène, avec le procédé de dépôt en mode DC pulsé réactif, caractérisé par un chauffage et une assistance ionique favorisant la cristallisation de WO₃, et par une pression de travail élevée, à savoir par exemple une pression P (Ar + O₂) = 2,5 10⁻² mbar, conférant au matériau une porosité suffisante pour sa réactivité vis-à-vis de l'intercalation des protons (représentée par le taux d'intercalation x dans HₓWO₃).

Dans la couche active initialement déposée x = 0.

Trois empilements avec des couches de HₓWO₃-c respectivement d'une épaisseur de 320 nm, 560 nm et 730 nm sur une couche de WO_{3-y} (y = 0,5) de 400 nm, sur un substrat en verre, constitué par une lame de microscope d'épaisseur 1 mm, ont été étudiés.

La modulation réversible de la réponse optique en réflexion totale dans l'infrarouge est assurée par la variation du taux d'intercalation x, qui correspond au taux de protons dans le matériau actif HₓWO₃-c.

On fait varier x de 0 à 0,5.

### a) Empilement HₓWO₃-c (320 nm) / WO_{3-y} (400 nm) / verre.

Avec cet empilement, comme cela ressort du Tableau 1 et des Figures 3 et 4, on obtient une modulation privilégiée de la réflexion totale dans la bande II du fait de la faible épaisseur de la couche de matériau actif.

**TABLEAU 1**

| **x** | **R (II) (*)** | **R (III) (*)** |
|---|---|---|
| 0,5 | 0,51 | 0,55 |
| 0,35 | 0,49 | 0,48 |
| 0,25 | 0,46 | 0,41 |
| 0,2 | 0,40 | 0,35 |
| 0,1 | 0,27 | 0,37 |
| 0,05 | 0,18 | 0,42 |
| 0 | 0,07 | 0,49 |

| | | |
|---|---|---|
| (*) R(II) et R(III) représentent respectivement les moyennes des coefficients de réflexion totale R_{T} produite par la partie active de l'empilement dans les bandes (II) et (III) du domaine infrarouge. | | |

Cet empilement, représentatif du dispositif selon l'invention, est très actif en bande II (ΔR II = 51% - 7% soit 44%) et quasi-inactif en bande III (ΔR III = 55% - 49% soit 6%), lorsque x varie de 0 à 0,5.

Les temps de réponse globaux pour obtenir un contraste maximal en bande II sont inférieurs à la minute pour une surface de 1 cm².

Avec un empilement complet selon l'invention qui comprendrait alors un électrolyte solide limitant la cinétique, on peut penser que les temps de réponse globaux pourraient être de plusieurs minutes, à moins de réduire la plage de variation des x de 0,1 à 0,5 (car HₓWO₃-c est conducteur quel que soit x), avec un contraste optique atténué.

Ainsi, en limitant la modulation entre 0V (x = 0,1) et -0,8V (x = 0,5), les contrastes deviennent plus équilibrés entre les bandes II et III, soit : ΔR II = 24% et ΔR III = 18% (voir Tableau 1).

### b) Empilement HₓWO₃-c (560 nm) / WO_{3-y} (400 nm) / verre.

Avec cet empilement, comme cela ressort du Tableau 2 et des Figures 5 et 6, on obtient un bon compromis entre la modulation de la réflexion totale dans la bande II et la modulation de la réflexion totale dans la bande III dû à l'épaisseur intermédiaire du matériau actif.

**TABLEAU 2**

| **x** | **R (II) (*)** | **R (III) (*)** |
|---|---|---|
| 0,5 | 0,48 | 0,59 |
| 0,4 | 0,43 | 0,50 |
| 0,3 | 0,40 | 0,42 |
| 0,2 | 0,34 | 0,29 |
| 0,1 | 0,27 | 0,27 |
| 0 | 0,22 | 0,32 |

| | | |
|---|---|---|
| (*) R(II) et R(III) représentent respectivement les moyennes des coefficients de réflexion totale R_{T} produite par la partie active de l'empilement dans les bandes (II) et (III) du domaine infrarouge. | | |

Cet empilement, représentatif du dispositif selon l'invention, est actif en bande II (ΔR II = 26%) et en bande III (ΔR III = 27%), lorsque x varie de 0 à 0,5.

### c) Empilement HₓWO₃-c (730 nm) / WO_{3-y} (400 nm) / verre.

Avec cet empilement, comme cela ressort du Tableau 3 et des Figures 7 et 8, on obtient une modulation privilégiée de la réflexion totale dans la bande III du fait de l'épaisseur importante de la couche de matériau actif.

**TABLEAU 3**

| **x** | **R (II) (*)** | **R (III) (*)** |
|---|---|---|
| 0,5 | 0,48 | 0,58 |
| 0,4 | 0,44 | 0,52 |
| 0,3 | 0,37 | 0,39 |
| 0,2 | | 0,25 |
| 0,1 | 0,24 | 0,21 |
| 0 | 0,22 | 0,22 |

| | | |
|---|---|---|
| (*) R(II) et R(III) représentent respectivement les moyennes des coefficients de réflexion totale R_{T} produite par la partie active de l'empilement dans les bandes (II) et (III) du domaine infrarouge. | | |

Cet empilement, représentatif du dispositif selon l'invention, est actif dans la bande II (ΔR II = 26%) et plus actif dans la bande III (ΔR III = 36 %), lorsque x varie de 0 à 0,5.

## Revendications

1. Bicouche (7) pour un dispositif électrochrome, comprenant une couche (9) à réflexion variable dans l'infrarouge, d'un matériau électrochrome à réflexion variable dans l'infrarouge selon un taux d'intercalation protonique variable x, ledit matériau électrochrome à réflexion variable dans l'infrarouge étant choisi parmi l'oxyde de tungstène cristallisé HₓWO₃-c où x est compris entre 0 et 1, et l'oxyde de tungstène cristallisé hydraté HₓWO₃.nH₂O-c où x est compris entre 0 et 1, et n est un nombre entier de 1 à 2, ledit bicouche étant **caractérisé en ce qu'**il comprend une couche (8) d'un oxyde de tungstène sous stoechiométrique, non électrochrome, WO_{3-y} où y est compris entre 0,2 et 1, optiquement absorbante dans l'infrarouge, conductrice électronique, poreuse, et formant une électrode ; ladite couche (8) d'oxyde de tungstène WO_{3-y} étant disposée sous ladite couche (9) à réflexion variable dans l'infrarouge.

2. Dispositif électrochrome tout-solide à réflexion ou émission infrarouge contrôlée, notamment de type électrocommandable, comprenant un empilement, ledit empilement comprenant successivement depuis une face arrière (3) jusqu'à une face avant (1) exposée aux rayons infrarouges (2) :
a) un substrat (4) en un matériau conducteur électronique, ou un substrat en un matériau non conducteur électronique recouvert d'une couche en un matériau conducteur électronique, ledit substrat en un matériau conducteur électronique ou ladite couche en un matériau conducteur électronique formant une première électrode ;
b) une couche en un matériau électrochrome de stockage protonique (5) ;
c) une couche d'un électrolyte conducteur protonique et isolant électronique (6) ;
d) un bicouche (7) selon la revendication 1, ladite couche (8) d'un oxyde de tungstène sous stoechiométrique, non électrochrome, WO_{3-y} formant une seconde électrode et étant disposée entre ladite couche (9) à réflexion variable dans l'infrarouge et ladite couche d'un électrolyte (6), sur ladite couche d'un électrolyte (6) ;
e) une couche de protection (10), transparente aux rayons infrarouges, en un matériau inorganique sur ladite couche (9) à réflexion variable dans l'infrarouge.

3. Dispositif selon la revendication 2, dans lequel ledit substrat (4) est en un matériau conducteur électronique choisi parmi les matériaux résistants mécaniquement et chimiquement aux sollicitations du milieu extérieur et chimiquement compatibles vis-à-vis d'un fonctionnement protonique et notamment chimiquement compatible vis-à-vis du matériau électrochrome de stockage protonique, de préférence ledit matériau conducteur électronique est choisi parmi les métaux tels que l'aluminium, le platine ou le chrome, et leurs alliages.

4. Dispositif selon la revendication 2, dans lequel ledit substrat (4) est en un matériau non conducteur électronique choisi parmi les matériaux résistants mécaniquement et chimiquement aux sollicitations du milieu extérieur et chimiquement compatibles vis-à-vis d'un fonctionnement protonique et notamment chimiquement compatibles vis-à-vis du matériau électrochrome de stockage protonique, de préférence ledit matériau non conducteur électronique est choisi parmi les verres et les polymères organiques résistants mécaniquement et chimiquement, tels que le Poly (Téréphtalate d'éthylène) ou PET.

5. Dispositif selon l'une quelconque des revendications 2 et 4, dans lequel la couche en un matériau conducteur électronique est en un matériau choisi parmi les matériaux résistants mécaniquement et chimiquement aux sollicitations du milieu extérieur, et chimiquement compatibles vis-à-vis d'un fonctionnement protonique et notamment chimiquement compatibles vis-à-vis du matériau électrochrome de stockage protonique, de préférence ledit matériau conducteur électronique est choisi parmi les métaux tels que l'aluminium, le platine, le chrome et leurs alliages ; et les oxydes métalliques conducteurs électroniques tels que l'oxyde d'indium dopé à l'étain ou ITO et l'oxyde d'étain dopé au fluor ou FTO.

6. Dispositif selon l'une quelconque des revendications 2 à 5, dans lequel le matériau électrochrome de stockage protonique (5) est choisi parmi les matériaux électrochromes de stockage protonique chimiquement compatibles vis-à-vis d'un fonctionnement protonique, notamment chimiquement compatibles vis-à-vis de l'électrolyte conducteur protonique et isolant électronique, de préférence le matériau électrochrome de stockage protonique (5) est choisi parmi les oxydes métalliques hydratés de préférence amorphes tels que l'oxyde de tungstène hydraté HₓWO₃.nH₂O, ou x est compris entre 0 et 1, et n est un nombre entier de 1 à 2, et les mélanges de deux ou plus desdits oxydes.

7. Dispositif selon l'une quelconque des revendications 2 à 6, dans lequel l'électrolyte conducteur protonique et isolant électronique (6) est choisi parmi les électrolytes conducteurs protoniques et isolants électroniques chimiquement compatibles vis-à-vis d'un fonctionnement protonique, notamment chimiquement compatibles (inertes) vis-à-vis de l'oxyde de tungstène cristallisé HₓWO₃-c (oxyde de tungstène protoné) ou de l'oxyde de tungstène cristallisé hydraté HₓWO₃.nH₂O-c, de préférence l'électrolyte conducteur protonique et isolant électronique est choisi parmi les oxydes métalliques hydratés de préférence amorphes tels que l'oxyde de tantale Ta₂O₅ hydraté amorphe, l'oxyde de zirconium hydraté amorphe et les mélanges de deux ou plus desdits oxydes.

8. Dispositif selon l'une quelconque des revendications 2 à 7, dans lequel la couche de protection (10) transparente aux rayons infrarouges est en un matériau choisi parmi les matériaux compatibles vis-à-vis d'un fonctionnement protonique, notamment chimiquement compatibles vis-à-vis de l'oxyde de tungstène cristallisé HₓWO₃-c ou de l'oxyde de tungstène cristallisé hydraté HₓWO₃.nH₂O-c, de préférence la couche de protection (10) transparente aux rayons infrarouges est en un matériau choisi parmi les matériaux inorganiques non toxiques, de préférence parmi les oxydes de métaux et de métalloïdes, de préférence denses, tels que l'oxyde de cérium CeO₂, l'oxyde d'yttrium Y₂O₃, la silice SiO₂ et les mélanges de deux ou plus desdits oxydes de métaux ou de métalloïdes.

9. Dispositif selon l'une quelconque des revendications 2 à 8, dans lequel le substrat a une épaisseur de 0,175 mm à 1 mm.

10. Dispositif selon l'une quelconque des revendications 2 à 9, dans lequel la couche en un matériau conducteur électronique qui recouvre le substrat en un matériau non conducteur électronique a une épaisseur de 50 à 150 nm ; la couche d'un matériau électrochrome de stockage protonique (5) a une épaisseur de 0,2 à 1 *µ*m, de préférence de 0,4 à 1 *µ*m ; la couche en un électrolyte conducteur protonique et isolant électronique (6) a une épaisseur de 0,2 à 1 *µ*m, de préférence de 0,4 à 1 *µ*m ; la couche (8) en oxyde de tungstène sous stoechiométrique, non électrochrome, WO_{3-y,} a une épaisseur 0,2 à 0,5 *µ*m, de préférence de 0,4 à 0,5 *µ*m ; la couche (9) à réflexion variable dans l'infrarouge a une épaisseur 0,2 à 1 *µ*m, de préférence de 0,3 à 0,8 *µ*m ; et la couche de protection (10) transparente aux rayons infrarouges a une épaisseur de 0,1 à 1 *µ*m, de préférence de 0,4 à 1 *µ*m.

11. Procédé de préparation du dispositif selon l'une quelconque des revendications 2 à 10, dans lequel on réalise les étapes successives suivantes :
a) on dépose une couche en un matériau électrochrome de stockage protonique (5) sur un substrat (4) -en un matériau conducteur électronique, ou sur une couche en un matériau conducteur électronique disposée sur un substrat en un matériau non conducteur électronique ledit substrat en un matériau conducteur électronique ou ladite couche en un matériau conducteur électronique formant une première électrode ;
b) on dépose une couche d'un électrolyte conducteur protonique et isolant électronique (6) sur la couche en un matériau électrochrome de stockage protonique (5);
c) on dépose une couche (8) d'un oxyde de tungstène sous stoechiométrique, non-électrochrome, WO_{3-y} où y est compris entre 0,2 et 1, optiquement absorbante dans l'infrarouge, conductrice électronique, poreuse, formant une seconde électrode, sur la couche d'un électrolyte conducteur protonique et isolant électronique ;
d) on dépose une couche (9) à réflexion variable dans l'infrarouge d'un matériau électrochrome à réflexion variable dans l'infrarouge selon un taux d'intercalation protonique variable x, choisi parmi l'oxyde de tungstène cristallisé HₓWO₃-c où x est compris entre 0 et 1 et l'oxyde de tungstène cristallisé hydraté HₓWO₃.nH₂O-c où x est compris entre 0 et 1 et n est un nombre entier de 1 à 2, sur la couche (8) d'un oxyde de tungstène sous stoechiométrique, non-électrochrome, WO_{3-y} ;
e) on dépose une couche de protection (10), transparente aux rayons infrarouges, en un matériau inorganique, sur la couche (9) à réflexion variable dans l'infrarouge d'un matériau électrochrome à réflexion variable dans l'infrarouge.

12. Procédé selon la revendication 11, dans lequel les couches sont déposées par un procédé de dépôt Physique en phase vapeur ou PVD choisi parmi la pulvérisation cathodique, l'ablation laser et l'évaporation.

13. Procédé selon la revendication 12, dans lequel toutes les couches sont déposées par un même procédé de dépôt physique en phase vapeur, de préférence par pulvérisation cathodique magnétron réactive.

14. Procédé selon la revendication 13, dans lequel toutes les étapes sont réalisées dans une même enceinte sous vide sans ouverture de l'enceinte entre chacune des étapes.

15. Utilisation du dispositif selon l'une quelconque des revendications 2 à 10, pour la protection thermique d'un objet, en particulier d'un satellite.

## Patentansprüche

1. Doppelschicht (7) für eine elektrochrome Vorrichtung, umfassend eine Schicht (9), mit im Infrarotbereich variabler Reflexion, eines elektrochromen Materials mit im Infrarotbereich variabler Reflexion gemäß einer Protoneninterkalationsrate x, wobei das elektrochrome Material, mit im Infrarotbereich variabler Reflexion, ausgewählt wird zwischen dem kristallisierten Wolframoxid HₓWO₃-c, wo x enthalten ist zwischen 0 und 1, und dem hydratisierten kristallisierten Wolframoxid HₓWO₃.nH₂O-c, wo x enthalten ist zwischen 0 und 1 und n eine ganze Zahl von 1 bis 2 ist, die genannte Doppelschicht **dadurch gekennzeichnet ist, dass** sie eine Schicht (8) umfasst, aus einem unterstöchiometrischen, nicht-elektrochromen Wolframoxid WO_{3-y} mit y enthalten zwischen 0,2 und 1, optisch absorbierend im Infrarotbereich, elektronisch leitend, porös, und eine Elektrode bildend; wobei die genannte Schicht (8) aus Wolframoxid WO_{3-y} sich unter der genannten Schicht (9) mit im Infrarotbereich variabler Reflexion befindet.

2. Völlig feste, bzw. ganz aus Feststoffen bestehende, elektrochrome Vorrichtung mit kontrollierter Infrarot-Reflexion oder-Emission, insbesondere des elektrisch steuerbaren Typs, einen Stapel umfassend, wobei der genannte Stapel von einer Rückseite (3) bis zu einer den Infrarotstrahlen (2) ausgesetzten Vorderseite (1) nacheinander umfasst:
a) ein Substrat (4) aus einem elektronenleitfähigen Material, oder ein Substrat aus einem nicht-elektronenleitfähigen Material, überzogen mit einer Schicht aus einem elektronenleitfähigen Material, wobei das genannte Substrat aus einem elektronenleitfähigen Material oder die genannte Schicht aus einem elektronenleitfähigen Material eine erste Elektrode bildet;
b) eine Schicht aus einem elektrochromen Protonenspeichermaterial (5) ;
c) eine Schicht aus einem protonenleitfähigen und elektronisch isolierenden Elektrolyten (6);
d) eine Doppelschicht (7) nach Anspruch 1, wobei die genannte Schicht (8) aus einem unterstöchiometrischen, nicht-elektrochromen Wolframoxid WO_{3-y} eine zweite Elektrode bildet und angeordnet ist zwischen der genannten Schicht (9) mit im Infrarotbereich variabler Reflexion und der genannten Schicht aus einem Elektrolyten (6), über der genannten Schicht (9) aus einem Elektrolyten (6);
e) eine Schutzschicht (10) aus einem anorganischen Material, transparent für die Infrarotstrahlen, über der genannten Schicht (9) mit im Infrarotbereich variabler Reflexion.

3. Vorrichtung nach Anspruch 2, bei der das genannte Substrat (4) aus einem elektronenleitfähigen Material ist, ausgewählt unter den Materialien, die mechanisch und chemisch den Beanspruchungen der Außen- bzw. Umgebungsatmosphäre standhalten und chemisch kompatibel sind gegenüber einem Protonenbetrieb, und insbesondere chemisch kompatibel gegenüber dem elektrochromen Protonenspeichermaterial, wobei das genannte elektronenleitfähige Material vorzugsweise ausgewählt wird unter den Metallen wie etwa dem Aluminium, dem Platin oder dem Chrom, und ihren Legierungen.

4. Vorrichtung nach Anspruch 2, bei der das genannte Substrat (4) aus einem nicht-elektronenleitfähigen Material ist, ausgewählt unter den Materialien, die mechanisch und chemisch den Beanspruchungen der Außenatmosphäre standhalten und chemisch kompatibel sind gegenüber einem Protonenbetrieb, und insbesondere chemisch kompatibel gegenüber dem elektrochromen Protonenspeichermaterial, wobei das gennante nicht-elektronenleitfähige Material vorzugsweise ausgewählt wird unter den Gläsern und den mechanisch und chemisch widerstandsfähigen organischen Polymeren wie etwa dem Polyethylenterephthalat oder PET.

5. Vorrichtung nach einem der Ansprüche 2 und 4, bei der die Schicht aus einem elektronenleitfähigen Material aus einem Material ist, das ausgewählt wird unter den Materialien, die mechanisch und chemisch den Beanspruchungen der Außen- bzw. Umgebungsatmosphäre standhalten und chemisch kompatibel sind gegenüber einem Protonenbetrieb, und insbesondere chemisch kompatibel gegenüber dem elektrochromen Protonenspeichermaterial, wobei das genannte elektronenleitfähige Material vorzugsweise ausgewählt wird unter den Metallen wie etwa dem Aluminium, dem Platin dem Chrom und ihren Legierungen, und den elektronenleitfähigen Metalloxiden wie etwa dem Indiumzinnoxid oder ITO und dem Fluor-Zinnoxid oder FTO.

6. Vorrichtung nach einem der Ansprüche 2 bis 5, bei der das elektrochrome Protonenspeichermaterial (5) ausgewählt wird unter den elektrochromen Protonenspeichermaterialien, die chemisch kompatibel sind gegenüber einem Protonenbetrieb, insbesondere chemisch kompatibel gegenüber dem protonenleitfähigen und elektronisch isolierenden Elektrolyten, wobei das elektrochrome Protonenspeichermaterial (5) ausgewählt wird unter den bevorzugt amorphen hydratisierten Metalloxiden wie etwa dem hydratisierten Wolframoxid HₓWO₃.nH₂O, wo x zwischen 0 und 1 enthalten ist und n eine ganze Zahl von 1 bis 2 ist, und den Mischungen aus zwei, oder mehr, der genannten Oxide.

7. Vorrichtung nach einem der Ansprüche 2 bis 6, bei welcher der protonenleitfähige und elektronisch isolierende Elektrolyt (6) ausgewählt wird unter den protonenleitfähigen und elektronisch isolierenden Elektrolyten, die chemisch kompatibel sind gegenüber einem Protonenbetrieb, insbesondere elektronisch kompatibel (inert) gegenüber dem kristallisierten Wolframoxid HₓWO₃-c (protoniertes Wolframoxid) oder dem hydratisierten kristallisierten Wolframoxid HₓWO₃.nH₂O-c, wobei vorzugsweise der protonenleitfähige und elektronisch isolierende Elektrolyt ausgewählt wird unter den vorzugsweise amorphen hydratisierten Metalloxiden wie etwa dem amorphen hydratisierten Tantaloxid Ta₂O₅, dem amorphen hydratisierten Zinkonoxid und den Mischungen aus zwei, oder mehr, der genannten Oxide.

8. Vorrichtung nach einem der Ansprüche 2 bis 7, bei der die für Infrarotstrahlen transparente Schutzschicht (10) aus einem Material ist, das ausgewählt wird unter den gegenüber einem Protonenbetrieb kompatiblen Materialien, insbesondere chemisch kompatibel gegenüber dem kristallisierten Wolframoxid HₓWO_{3-c} oder dem hydratisierten kristallisierten Wolframoxid HₓWO₃.nH₂O-c, wobei vorzugsweise die für die Infrarotstrahlen transparente Schutzschicht (10) aus einem Material ist, das ausgewählt wird unter den anorganischen nichtgiftigen Materialien, bevorzugt unter den, vorzugweise verdichteten, Metall- und Metalloidoxiden wie etwa dem Ceriumoxid CeO₂, dem Yttriumoxid Y₂O₃, dem Siliciumoxid bzw. -dioxid SiO₂ und den Mischungen aus zwei, oder mehr, der genannten Metall- oder Metalloidoxide.

9. Vorrichtung nach einem der Ansprüche 2 bis 8, bei der das Substrat eine Dicke von 0,175 mm bis 1 mm hat.

10. Vorrichtung nach einem der Ansprüche 2 bis 9, bei der die Schicht aus einem elektronenleitfähigen Material, welche das Substrat aus einem nicht-elektronenleitfähigen Material überzieht, eine Dicke von 50 bis 150 nm hat; die Schicht aus einem elektrochromen Protonenspeichermaterial (5) eine Dicke von 0,2 bis 1 µm, vorzugsweise von 0,4 bis 1 µm hat; die Schicht aus einem protonenleitfähigen und elektrisch isolierenden Elektrolyten (6) eine Dicke von 0,2 bis 1 µm, vorzugsweise von 0,4 bis 1 µm hat; die Schicht (8) aus unterstöchiometrischen, nicht-elektrochromen Wolframoxid WO_{3-y} eine Dicke von 0,2 bis 0,5 µm, vorzugsweise von 0,4 bis 0,5 µm hat : die Schicht (9) mit im Infrafrotbereich variabler Reflexion eine Dicke von 0,2 bis 1 µm, vorzugsweise von 0,3 bis 0,8 µm hat; und die für Infrarotstrahlen transparente Schutzschicht (10) eine Dicke von 0,1 bis 1 µm, vorzugsweise von 0,4 bis 1 µm hat.

11. Verfahren nach einem der Ansprüche 2 bis 10, bei dem man die folgenden auf einanderfolgenden Schritte ausführt :
a) man erzeugt eine Schicht aus einem elektrochromen Protonenspeichermaterial (5) auf einem Substrat (4) aus einem elektronenleitfähigen Material, oder auf einer Schicht aus einem elektronenleitfähigen Material, abgeschieden auf einem Substrat aus einem nicht-elektronenleitfähigen Material, wobei das genannte Substrat aus einem elektronenleitfähigen Material oder die genannte Schicht aus einem elektronenleitfähigen Material eine erste Elektrode bildet;
b) man erzeugt eine Schicht aus einem protonenleitfähigen und elektronisch isolierenden Elektrolyten (6) auf der Schicht aus einem ersten elektrochromen Protonenspeichermaterial (5);
c) man erzeugt eine Schicht (8) aus einem unterstöchiometrischen, nicht-elektrochromen Wolframoxid WO_{3-y} mit y enthalten ist zwischen 0,2 und 1, optisch absorbierend im Infrarotbereich, elektronisch leitfähig, porös, und eine zweite Elektrode bildend, auf der Schicht eines protonenleitfähigen und elektronisch isolierenden Elektrolyten ;
d) man erzeugt auf der Schicht (8) aus einem unterstöchiometrischen, nicht-elektrochromen Wolframoxid WO_{3-y} eine Schicht (9) mit im Infrarotbereich variabler Reflexion aus einem Material mit im Infrarotbereich gemäß einer Protoneninterkalationsrate x variablen Reflexion, ausgewählt zwischen dem kristallisierten Wolframoxid HₓWO₃-c, wo x enthalten ist zwischen 0 und 1, und dem hydratisierten kristallisierten Wolframoxid HₓWO₃.nH₂O-c, wo x enthalten ist zwischen 0 und 1 und n eine ganze Zahl von 1 bis 2 ist,
e) man scheidet eine für die Infrarotstrahlen transparente Schutzschicht (10) aus einem anorganischen Material ab, auf der Schicht (9) mit im Infrarotbereich variabler Reflexion aus einem elektrochromen Material mit im Infrarotbereich variabler Reflexion.

12. Verfahren nach Anspruch 11, bei dem die Schichten durch ein physikalisches Gasphasenabscheidungsverfahren oder PVD erzeugt werden, ausgewählt unter Katodenzerstäubung, Laserablation und Verdampfen.

13. Verfahren nach Anspruch 12, bei dem alle Schichten mit demselben physikalischen Gasphasenabscheidungsverfahren erzeugt werden, vorzugsweise durch reaktives Magnetronsputtern.

14. Verfahren nach Anspruch 13, bei dem alle Schritte in einem selben Rezipienten unter Vakuum durchgeführt werden, ohne Öffnen des Rezipienten zwischen den einzelnen Schritten.

15. Anwendung der Vorrichtung nach einem der Ansprüche 2 bis 10, für den thermischen Schutz eines Objekts bzw. Gegenstands, insbesondere eines Satelliten.

## Claims

1. A bilayer (7) for an electrochromic device comprising a layer (9) with variable infrared reflection of an electrochromic material with variable infrared reflection at a variable proton intercalation rate x, said electrochrome material with variable infrared reflection being chosen from among crystallized tungsten oxide HₓWO₃-c where x is comprised between 0 and 1, and hydrated crystallized tungsten oxide HₓWO₃.nH₂O-c where x is comprised between 0 and 1 and n is an integer of 1 to 2, said bilayer being **characterized in that** it comprises a layer (8) of a non-electrochromic, sub-stoichiometric tungsten oxide WO_{3-y}, where y is comprised between 0.2 and 1, optically absorbent in the infrared, electron-conducting, porous, and forming an electrode; said tungsten oxide layer (8) WO_{3-y} being arranged underneath said layer (9) with variable infrared reflection.

2. An all-solid electrochromic device with controlled infrared reflection or emission, in particular of electro-controllable type, comprising a stack, said stack successively comprising from a back face (3) as far as a front face (1) exposed to infrared radiation (2):
a) a substrate (4) made of an electron-conducting material, or a substrate made of a non-electron-conducting material coated with a layer made of an electron-conducting material, said substrate made of an electron-conducting material or said layer made of an electron-conducting material forming a first electrode;
b) a layer made of a proton storage electrochromic material (5);
c) a layer of a proton-conducting and electron-insulating electrolyte (6);
d) a bilayer (7) according to claim 1, said layer (8) of a non electrochromic, sub-stoichiometric tungsten oxide WO_{3-y} forming a second electrode and being arranged between said layer (9) with variable infrared reflection and said layer of an electrolyte (6), on said layer of an electrolyte (6);
e) a protective layer (10) transparent to infrared radiation, made of an inorganic material on said layer (9) with variable infrared reflection.

3. The device according to claim 2, wherein said substrate (4) is made of an electron-conducting material chosen from among materials having mechanical and chemical resistance to stresses of the external medium and chemically compatible with proton-operation and in particular chemically compatible with the proton storage electrochromic material, preferably said electron-conducting material is chosen from among metals such as aluminium, platinum or chromium, and the alloys thereof.

4. The device according to claim 2, wherein said substrate (4) is made of a non-electron-conducting material chosen from among materials having mechanical and chemical resistance to stresses of the external medium and chemically compatible with proton-operation and in particular chemically compatible with the proton storage electrochromic material, preferably said non-electron-conducting material is chosen from among glasses and organic polymers having mechanical and chemical resistance such as polyethylene terephthalate or PET.

5. The device according to any one of claims 2 and 4, wherein the layer made of an electron-conducting material is made of a material chosen from among materials having mechanical and chemical resistance against stresses of the external medium, and chemically compatible with proton-operation and in particular chemically compatible with the proton storage electrochromic material, preferably said electron-conducting material is chosen from among metals such as aluminium, platinum, chromium and alloys thereof; and electron-conducting metal oxides such as indium tin oxide or ITO and fluorine-doped tin oxide or FTO.

6. The device according to any one of claims 2 to 5, wherein the proton storage electrochromic material (5) is chosen from among proton storage electrochromic materials chemically compatible with proton-operation, in particular chemical compatible with the proton-conducting and electron-insulating electrolyte, preferably the proton storage electrochromic material (5) is chosen from among hydrated metal oxides, preferably amorphous, such as hydrated tungsten oxide HₓWO₃.nH₂O where x is comprised between 0 and 1, and n is an integer of 1 to 2, and mixtures of two or more of said oxides.

7. The device according to any one of claims 1 to 6, wherein the proton-conducting and electron-insulating electrolyte (6) is chosen from among proton-conducting and electron-insulating electrolytes chemically compatible with proton-operation, in particular chemically compatible (inert) with/against crystallized tungsten oxide HₓWO₃-c (protonated tungsten oxide) or hydrated crystallized tungsten oxide HₓWO₃.nH₂O-c, preferably the proton-conducting and electron-insulating electrolyte is chosen from among hydrated metal oxides, preferably amorphous, such as amorphous hydrated tantalum oxide Ta₂O₅, amorphous hydrated zirconium oxide and mixtures of two or more of said oxides.

8. The device according to any one of the claims 2 to 7, wherein the protective layer (10) transparent to infrared radiations is made of a material chosen from among materials compatible with proton-operation, in particular chemically compatible with crystallized tungsten oxide HₓWO₃-c or hydrated crystallized tungsten oxide HₓWO₃.nH₂O-c, preferably the protective layer (10) transparent to infrared radiations is made of a material chosen from among non-toxic inorganic materials, preferably from among metal and metalloid oxides, preferably dense, such as cerium oxide CeO₂, yttrium oxide Y₂O₃, silica SiO₂ and mixtures of two or more of said metal or metalloid oxides.

9. The device according to any one of the claims 2 to 8, wherein the substrate has a thickness of 0.175 mm to 1 mm.

10. The device according to any one of the claims 2 to 9, wherein the layer made of an electron-conducting material coating the substrate made of a non-electron-conducting material has a thickness of 50 to 150 nm ; the layer of a proton storage electrochromic material (5) has a thickness of 0.2 to 1 µm, preferably from 0.4 to 1 µm; the layer made of a proton-conducting and electron-insulating electrolyte (6) has a thickness of 0.2 to 1 µm, preferably of 0.4 to 1 µm ; the layer (8) made of non-electrochromic, sub-stoichiometric tungsten oxide WO_{3-y} has a thickness of 0.2 to 0.5 µm, preferably of 0.4 to 0.5 µm ; the layer (9) having variable infrared reflection has a thickness of 0.2 to 1 µm, preferably of 0.3 to 0.8 µm ; and the protective layer (10) transparent to infrared radiations has a thickness of 0.1 to 1 µm, preferably of 0.4 to 1 µm.

11. A method for preparing the device according to any one of claims 2 to 10 wherein the following successive steps are performed:
a) a layer made of a proton storage electrochromic material (5) is deposited on a substrate (4) made of an electron-conducting material, or on a layer made of an electron-conducting material arranged on a substrate made of a non-electron-conducting material, said substrate made of an electron-conducting material or said layer made of an electron-conducting material forming a first electrode;
b) a layer of a proton-conducting and electron-insulating electrolyte (6) is deposited on the layer made of a proton storage electrochromic material (5) ;
c) a layer (8) of a non-electrochromic, sub-stoichiometric tungsten oxide WO_{3-Y}, where y is comprised between 0.2 and 1, optically absorbent in the infrared, electron-conducting, porous, forming a second electrode, is deposited on the layer of a proton-conducting and electron-insulating electrolyte;
d) a layer (9) with variable infrared reflection of an electrochromic material with variable infrared reflection at a variable proton intercalation rate x chosen from among crystallized tungsten oxide HₓWO₃-c where x is comprised between 0 and 1 and hydrated crystallized tungsten oxide HₓWO₃.nH₂O-c where x is comprised between 0 and 1 and n is an integer of 1 to 2, is deposited on the layer (8) of a non-electrochromic, sub-stoichiometric tungsten oxide WO_{3-y};
e) a protective layer (10) transparent to infrared radiations, made of an inorganic material is deposited on the layer (9) with variable infrared reflection of an electrochromic material with variable infrared reflection.

12. The method according to claim 11, wherein the layers are deposited using a physical vapour phase deposition method, PVD, chosen from among cathode sputtering, laser ablation and evaporation.

13. The method according to claim 12, wherein all the layers are deposited using one same physical vapour phase deposition method, preferably by reactive magnetron cathode sputtering.

14. The method according to claim 13, wherein all the steps are conducted in one same vacuum chamber without opening the chamber between each of the steps.

15. The use of the device according to any one of claims 2 to 10 for thermal protection of an object, in particular of a satellite.
